# EUROPÄISCHE PATENTSCHRIFT

(11) **EP 3 560 848 B1**
(45) Veröffentlichungstag und Bekanntmachung des Hinweises auf die Patenterteilung: **30.12.2020**
(21) Anmeldenummer: 18168649.4
(22) Anmeldetag: 23.04.2018
(51) Int. Cl.: B65B 35/18, B65G 47/91

(54) **VORRICHTUNG UND VERFAHREN ZUM TRANSFERIEREN VON BLISTERPACKUNGEN**
METHOD AND DEVICE FOR TRANSFERRING BLISTER PACKS
DISPOSITIF ET PROCÉDÉ DE TRANSFERT D'EMBALLAGES-COQUES

(43) Veröffentlichungstag der Anmeldung: 30.10.2019
(73) Patentinhaber: Uhlmann Pac-Systeme GmbH & Co. KG, 88471 Laupheim (DE)
(72) Erfinder: Hähnel, Bernd, 76297 Stutensee (DE); Armbruster, Andreas, 88348 Saulgau (DE); Damaschke, Norbert, 88451 Dettingen (DE); Bräunig, Tim, 88471 Laupheim (DE)
(74) Vertreter: Wächter, Jochen

(56) Entgegenhaltungen:
- EP-A1- 2 840 030
- WO-A1-2014/181307
- DE-A1-102004 043 332
- DE-A1-102006 047 925

## Beschreibung

Die vorliegende Erfindung betrifft eine Vorrichtung und ein Verfahren zum Transferieren von Blisterpackungen von einer Stanzstation, einem Transportmittel oder einem Zwischenspeicher an ein Fördermittel oder einen Speicher.

Blisterpackungen werden häufig in der pharmazeutischen Industrie bei der Verpackung von Medikamenten verwendet. Hierbei wird zunächst in einer Folienbahn eine Vielzahl von Näpfen gebildet, in welche Produkte, wie etwa Dragees oder Tabletten, eingebracht werden. Anschließend wird die Folienbahn mit den befüllten Näpfen mit einer Deckfolie versiegelt und einer Stanzstation zugeführt, in der die jeweiligen Blisterpackungen aus der Folienbahn ausgestanzt werden.

In einer weiteren Phase des Verpackungsprozesses werden die ausgestanzten Blisterpackungen mit Hilfe einer Transferiervorrichtung an ein Fördermittel übertragen. Siehe z.B EP-A-2 840 030. Die Blisterpackungen werden dabei in Stapeln in jeweiligen Aufnahmen des Fördermittels abgelegt. Abschließend werden die auf dem Fördermittel angeordneten Stapel von Blisterpackungen einer Verpackungsstation zugeführt, in der die Stapel von Blisterpackungen in entsprechende Verpackungen, wie etwa Faltschachteln, eingebracht werden. Die Zeit, welche die Transferiervorrichtung für die Übergabe von Blisterpackungen von der Stanzstation an das Fördermittel benötigt, hat logischerweise einen Einfluss auf den Durchsatz der gesamten Verpackungsmaschine.

Der Erfindung liegt die Aufgabe zugrunde, eine verbesserte Vorrichtung und ein Verfahren zum Transferieren von Blisterpackungen von einer Stanzstation, einem Transportmittel oder einem Zwischenspeicher an ein Fördermittel oder einen Speicher zu schaffen, wobei der Transfer von Blisterpackungen besonders effizient, präzise und schnell erfolgt.

Diese Aufgabe wird durch die Merkmale des Anspruchs 1 und des Anspruchs 10 gelöst.

Die erfindungsgemäße Vorrichtung zum Transferieren von Blisterpackungen umfasst eine erste Übergabeeinheit zur Übergabe der Blisterpackungen von einer Stanzstation, einem Transportmittel oder einem Zwischenspeicher zu einer Zwischenablage und eine zweite Übergabeeinheit zur Übergabe der Blisterpackungen von der Zwischenablage an ein Fördermittel oder einen Speicher. Die zweite Übergabeeinheit weist einen ersten Saugerarm auf, der bewegbar ist zwischen einer ersten Aufnahmestellung zum Aufnehmen einer ersten Blisterpackung von einer ersten Zwischenablageposition auf der Zwischenablage und einer ersten Abgabestellung zum Ablegen der ersten Blisterpackung in einer Endablageposition auf dem Fördermittel oder in dem Speicher. Außerdem weist die zweite Übergabeeinheit einen zweiten Saugerarm auf, der bewegbar ist zwischen einer zweiten Aufnahmestellung zum Aufnehmen einer zweiten Blisterpackung von einer zweiten Zwischenablageposition auf der Zwischenablage und einer zweiten Abgabestellung zum Ablegen der zweiten Blisterpackung in derselben Endablageposition. Der erste und der zweite Saugerarm sind zu beiden Seiten einer Längsmittelebene der Vorrichtung angeordnet. Jeder Saugerarm weist ein erstes Segment und ein zweites Segment auf, wobei das erste Segment jedes Saugerarms um eine zugehörige erste Achse, die senkrecht zur Längsmittelebene verläuft, drehbar befestigt ist. Das erste Segment jedes Saugerarms weist einen Abschnitt auf, an dem das zweite Segment drehbar um eine zur ersten Achse im Wesentlichen senkrecht verlaufende ortsveränderliche zweite Achse befestigt ist, wobei an dem zweiten Segment eine Saugvorrichtung zum Ansaugen und Halten einer Blisterpackung angeordnet ist. Die Saugerarme sind derart ausgestaltet und angesteuert, dass die Bewegung der Saugerarme von der ersten oder zweiten Aufnahmestellung zur ersten oder zweiten Abgabestellung und zurück eine kombinierte Bewegung ist, die sich zumindest aus einer ersten Drehbewegung des ersten Segments und des zweiten Segments um die erste Achse und einer zweiten Drehbewegung des zweiten Segments um die zweite Achse zusammensetzt. Die Saugerarme sind derart ausgestaltet und angesteuert, dass die Blisterpackungen in der ersten und zweiten Zwischenablageposition von den Saugvorrichtungen des ersten und zweiten Saugerarms von oben aufgenommen und ebenfalls von oben in die Endablageposition abgelegt werden. Die erste und zweite Zwischenablageposition sind bezüglich der Längsmittelebene nach außen versetzt angeordnet und die Endablageposition ist im Bereich der Längsmittelebene angeordnet. Die zweite Achse des ersten Saugerarms ist derart angeordnet, dass sich die zweite Achse des ersten Saugerarms während der ersten Drehbewegung des ersten Segments des ersten Saugerarms in einer ersten Ebene bewegt, die die erste Zwischenablageposition oder deren seitliche Projektion in einer ersten geraden Linie schneidet, die seitlich versetzt zur Mitte der ersten Zwischenablageposition ist. Die zweite Achse des zweiten Saugerarms ist derart angeordnet, dass sich die zweite Achse des zweiten Saugerarms während der ersten Drehbewegung des ersten Segments des zweiten Saugerarms in einer zweiten Ebene bewegt, die die zweite Zwischenablageposition oder deren seitliche Projektion in einer zweiten geraden Linie schneidet, die seitlich versetzt zur Mitte der zweiten Zwischenablageposition ist.

Auf diese Weise wird eine zuverlässige Übergabe von Blisterpackungen gewährleistet, bei der auf einfache Weise und mit hohem Durchsatz Blisterpackungen auf ein einbahniges Fördermittel oder an einen Speicher übergeben werden.

Es ist bevorzugt, dass das zweite Segment des ersten oder zweiten Saugerarms in der ersten oder zweiten Aufnahmestellung jeweils bezüglich der Längsmittelebene nach außen geschwenkt ist, und dass das zweite Segment des ersten oder zweiten Saugerarms in der ersten oder zweiten Abgabestellung jeweils bezüglich der Längsmittelebene nach innen geschwenkt ist. Durch diese Gestaltung wird der seitliche Versatz der Blisterpackungen während der Übergabe auf konstruktiv einfache Weise realisiert.

In einer bevorzugten Ausführungsform sind der erste und zweite Saugerarm derart angesteuert, dass der erste und zweite Saugerarm gegenläufige hin- und hergehende Schwenkbewegungen ausführen. Auf diese Weise kann der Durchsatz der Vorrichtung erhöht werden.

Es ist von Vorteil, wenn die zweiten Segmente und somit die an den Saugvorrichtungen des ersten und zweiten Saugerarms gehaltenen Blisterpackungen eine Drehbewegung um die zweite Achse von im Wesentlichen 180° ausführen, wenn sich die Saugerarme von der ersten oder zweiten Aufnahmestellung zur ersten oder zweiten Abgabestellung oder umgekehrt bewegen. Diese Drehbewegung sorgt auf einfache Weise dafür, dass sich die Blisterpackungen während der Übergabe um 180° um ihre Mittelpunkte drehen. Dies wiederum gewährleistet, dass die Blisterpackungen mit der Deckfolienseite nach oben abgelegt werden können.

Vorzugsweise führen die ersten Segmente eine Drehbewegung um die erste Achse von 120° bis 180° aus, wenn sich die Saugerarme von der ersten oder zweiten Aufnahmestellung zur ersten oder zweiten Abgabestellung oder umgekehrt bewegen. Es ist denkbar, dass die Saugvorrichtungen vom zweiten Segment der Saugerarme jeweils schräg abragen, sodass das erste Segment lediglich über einen geringeren Winkelbereich um die erste Achse verschwenkt werden muss als der Winkel von 180°, der von den Blisterpackungen von den Zwischenablagepositionen zur Endablageposition zurückzulegen ist.

Zur Anpassung an verschiedene Formate der Blisterpackungen und des gewünschten seitlichen Versatzes der Blisterpackungen bei der Übergabe können die Saugerarme parallel zur ersten Achse verschiebbar gelagert sein.

Es ist bevorzugt, dass die Saugvorrichtung jedes Saugerarms mindestens einen Saugkopf umfasst, der mittels mindestens eines Trägerarms am zweiten Segment befestigt ist. Besonders bevorzugt ist der mindestens eine Trägerarm starr an dem zweiten Segment befestigt.

Um den vom ersten Segment zu überstreichenden Winkelbereich zu reduzieren, kann der mindestens eine Trägerarm in der ersten oder zweiten Aufnahmestellung und in der ersten oder zweiten Abgabestellung vom zweiten Segment schräg nach unten abragen.

Das erfindungsgemäße Verfahren zum Transferieren von Blisterpackungen von einer Stanzstation, einem Transportmittel oder einem Zwischenspeicher zu einer Zwischenablage und von der Zwischenablage an ein Fördermittel oder einen Speicher mittels einer Vorrichtung umfasst folgende Schritte:
- Übergeben einer ersten und einer zweiten Blisterpackung von der Stanzstation, dem Transportmittel oder dem Zwischenspeicher zu der Zwischenablage, wobei die Blisterpackungen auf der Zwischenablage in einer Reihe nebeneinander in einer ersten und einer zweiten Zwischenablageposition zu beiden Seiten einer Längsmittelebene der Vorrichtung abgelegt werden;
- Aufnehmen einer ersten Blisterpackung in der ersten Zwischenablageposition von der Zwischenablage, Bewegen der ersten Blisterpackung und Ablegen der ersten Blisterpackung in einer Endablageposition auf dem Fördermittel oder in dem Speicher, wobei die erste Blisterpackung in der ersten Zwischenablageposition von oben aufgenommen und ebenfalls von oben in der Endablageposition auf dem Fördermittel oder in dem Speicher abgelegt wird, wobei die erste Blisterpackung in der ersten Zwischenablageposition bezüglich der Längsmittelebene nach außen versetzt angeordnet ist und in der Endablageposition im Bereich der Längsmittelebene abgelegt wird, und wobei die erste Blisterpackung in der Endablageposition im Vergleich zur ersten Zwischenablageposition mit derselben Seite nach oben, aber um 180° um ihren Mittelpunkt gedreht abgelegt wird; und
- Aufnehmen einer zweiten Blisterpackung in der zweiten Zwischenablageposition von der Zwischenablage, Bewegen der zweiten Blisterpackung und Ablegen der zweiten Blisterpackung in der Endablageposition auf dem Fördermittel oder in dem Speicher, wobei die zweite Blisterpackung in der zweiten Zwischenablageposition von oben aufgenommen und ebenfalls von oben in der Endablageposition auf das Fördermittel oder den Speicher abgelegt wird, wobei die zweite Blisterpackung in der zweiten Zwischenablageposition bezüglich der Längsmittelebene nach außen versetzt angeordnet ist und in der Endablageposition im Bereich der Längsmittelebene abgelegt wird, und wobei die zweite Blisterpackung in der Endablageposition im Vergleich zur zweiten Zwischenablageposition mit derselben Seite nach oben, aber um 180° um ihren Mittelpunkt gedreht abgelegt wird.

Auf diese Weise wird eine zuverlässige Übergabe von Blisterpackungen gewährleistet, bei der auf einfache Weise und mit hohem Durchsatz Blisterpackungen auf ein einbahniges Fördermittel oder in einen einbahnigen Speicher übergeben werden.

Bevorzugt wird das Aufnehmen, Bewegen und Ablegen der ersten und zweiten Blisterpackung von der Zwischenablage zum Fördermittel oder Speicher mittels Saugerarmen durchgeführt, die gegenläufige hin- und hergehende Schwenkbewegungen ausführen. Auf diese Weise werden die Blisterpackungen schonend behandelt und mit hohem Durchsatz übergeben.

Das Übergeben der ersten und zweiten Blisterpackung von der Stanzstation, dem Transportmittel oder dem Zwischenspeicher zu der Zwischenablage umfasst in einer ersten Alternative folgende Schritte:
- Aufnehmen der ersten Blisterpackung in einer ersten Bereitstellposition von der Stanzstation, dem Transportmittel oder dem Zwischenspeicher, Bewegen der ersten Blisterpackung und Ablegen der ersten Blisterpackung in der ersten Zwischenablageposition auf der Zwischenablage, wobei die erste Blisterpackung von oben in der ersten Zwischenablageposition auf die Zwischenablage abgelegt wird; und
- Aufnehmen der zweiten Blisterpackung in einer zweiten Bereitstellposition von der Stanzstation, dem Transportmittel oder dem Zwischenspeicher, Bewegen der zweiten Blisterpackung und Ablegen der zweiten Blisterpackung in der zweiten Zwischenablageposition auf der Zwischenablage, wobei die zweite Blisterpackung von oben in der zweiten Zwischenablageposition auf die Zwischenablage abgelegt wird.

Durch die zweibahnige Übergabe auf die Zwischenablagepositionen können die Blisterpackungen schnell aus der Stanzstation, dem Transportmittel oder dem Zwischenspeicher entnommen werden.

Dabei sind die erste und zweite Blisterpackung in der ersten und zweiten Bereitstellposition bevorzugt in einer Reihe zu beiden Seiten der Längsmittelebene angeordnet, und die erste und die zweite Blisterpackung werden in der ersten und zweiten Zwischenablageposition im Vergleich zur ersten und zweiten Bereitstellposition um 180° um ihre Mittelpunkte gedreht abgelegt. Die Übergabe der Blisterpackungen von der Stanzstation, dem Transportmittel oder dem Zwischenspeicher zur Zwischenablage erfolgt somit schnell und mit einfachen mechanischen Mitteln.

Wenn das Übergeben der ersten und zweiten Blisterpackung von der Stanzstation, dem Transportmittel oder dem Zwischenspeicher zu der Zwischenablage gleichzeitig erfolgt, ist dies förderlich für einen hohen Durchsatz der Vorrichtung.

In einer zweiten Alternative umfasst das Übergeben der ersten und zweiten Blisterpackung von der Stanzstation, dem Transportmittel oder dem Zwischenspeicher zu der Zwischenablage folgende Schritte:
- Aufnehmen der ersten Blisterpackung in einer Bereitstellposition von der Stanzstation, dem Transportmittel oder dem Zwischenspeicher, Bewegen der ersten Blisterpackung und Ablegen der ersten Blisterpackung in der ersten Zwischenablageposition auf der Zwischenablage, wobei die erste Blisterpackung von oben in der ersten Zwischenablageposition auf der Zwischenablage abgelegt wird, wobei die erste Blisterpackung in der Bereitstellposition im Bereich der Längsmittelebene angeordnet ist und in der ersten Zwischenablageposition nach außen versetzt zur Längsmittelebene abgelegt wird, und wobei die erste Blisterpackung in der ersten Zwischenablageposition im Vergleich zur Bereitstellposition um 180° um ihren Mittelpunkt gedreht abgelegt wird; und
- Aufnehmen einer zweiten Blisterpackung in derselben Bereitstellposition von der Stanzstation, dem Transportmittel oder dem Zwischenspeicher, Bewegen der zweiten Blisterpackung und Ablegen der zweiten Blisterpackung in der zweiten Zwischenablageposition auf der Zwischenablage, wobei die zweite Blisterpackung von oben in der zweiten Zwischenablageposition auf der Zwischenablage abgelegt wird, wobei die zweite Blisterpackung in der Bereitstellposition im Bereich der Längsmittelebene angeordnet ist und in der zweiten Zwischenablageposition nach außen versetzt zur Längsmittelebene abgelegt wird, und wobei die zweite Blisterpackung in der zweiten Zwischenablageposition im Vergleich zur Bereitstellposition um 180° um ihren Mittelpunkt gedreht abgelegt wird.

Diese Alternative liefert für einbahnige Stanzstationen, Transportmittel oder Zwischenspeicher eine Möglichkeit, die Blisterpackungen möglichst schnell und effektiv an die Zwischenablage zu übergeben.

Bevorzugt wird das Übergeben der ersten und zweiten Blisterpackung von der Stanzstation, dem Transportmittel oder dem Zwischenspeicher zu der Zwischenablage mittels Saugerarmen durchgeführt, die gegenläufige hin- und hergehende Schwenkbewegungen ausführen. Auf diese Weise werden die Blisterpackungen schonend behandelt und mit hohem Durchsatz übergeben.

Vorzugsweise sind die erste und zweite Blisterpackung in der ersten und zweiten Zwischenablageposition sowie in der Endablageposition mit der Deckfolie nach oben angeordnet. Außerdem ist es bevorzugt, wenn die erste und zweite Blisterpackung in der ersten und zweiten Bereitstellposition oder in der einzigen gemeinsamen Bereitstellposition mit der Deckfolie nach oben angeordnet sind. Diese Gestaltung ist bei Verwendung von Sauggreifern besonders geeignet.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Perspektivansicht einer erfindungsgemäßen Vorrichtung zum Transferieren von Blisterpackungen;
- Fig. 2: ist eine Draufsicht auf die Vorrichtung aus Fig. 1;
- Fig. 3 bis 6: sind schematische Perspektivansichten der Vorrichtung aus Fig. 1, die unterschiedliche Stadien des Übergabeprozesses darstellen;
- Fig. 7: ist eine schematische Perspektivansicht von zwei Saugerarmen, die bei der Vorrichtung gemäß Fig. 1 in der zweiten Übergabeeinheit verwendet werden;
- Fig. 8: ist eine schematische Perspektivansicht der wesentlichen Antriebskomponenten eines Saugerarms aus Fig. 7;
- Fig. 9: ist eine Querschnittsansicht zur Darstellung des inneren Aufbaus eines Saugerarms aus Fig. 7;
- Fig. 10: ist eine schematische Perspektivansicht eines Mechanismus zur Anpassung der Drehbewegung des zweiten Segments des Saugerarms aus Fig. 9 um die zweite Achse ;
- Fig. 11: ist eine schematische Perspektivansicht einer Variante einer ersten Übergabeeinheit, die bei der Vorrichtung gemäß Fig. 1 verwendet werden kann;
- Fig. 12: ist eine Draufsicht auf eine Abwandlung der erfindungsgemäßen Vorrichtung aus Fig. 1, wobei als erste Übergabeeinheit die Übergabeeinheit aus Fig. 11 verwendet wird;
- Fig. 13: ist eine schematische Perspektivansicht der Übergabeeinheit aus Fig. 11 in einem anderen Stadium des Übergabeprozesses; und
- Fig. 14: ist eine schematische Perspektivansicht der Saugerarme der Übergabeeinheit aus Fig. 11.

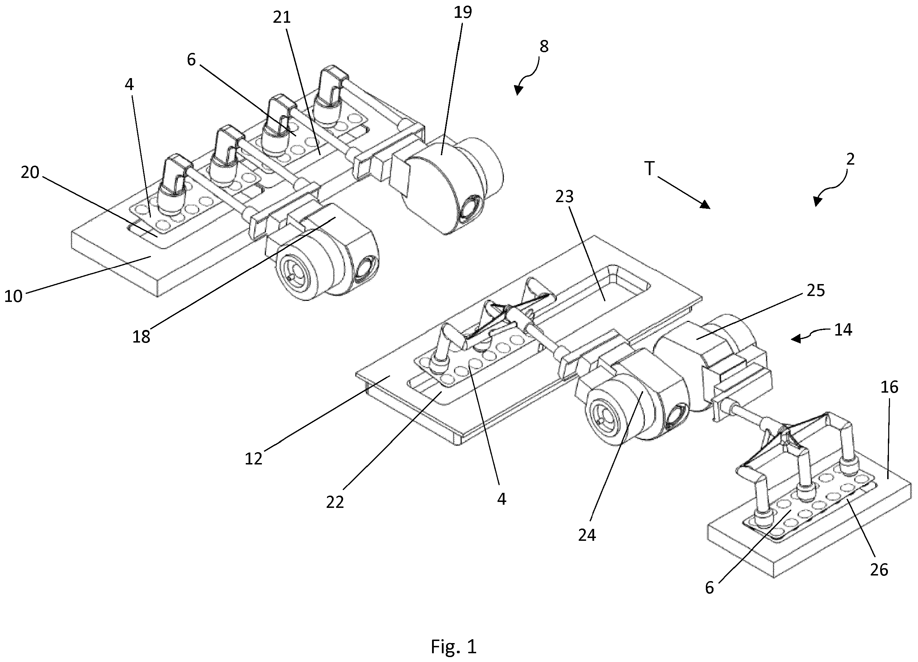

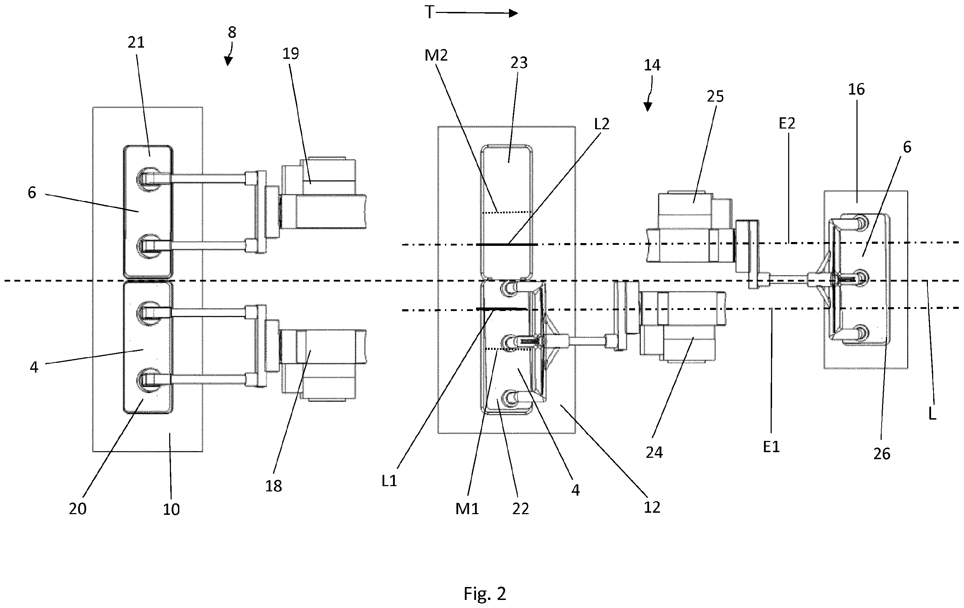

Fig. 1 bis 6 zeigt eine erfindungsgemäße Vorrichtung 2 zum Transferieren von Blisterpackungen 4, 6. In Fig. 1 und Fig. 3 bis 6 ist die Vorrichtung 2 zum Transferieren von Blisterpackungen 4, 6 in verschiedenen Stadien des Übergabeprozesses dargestellt. Fig. 2 ist eine Draufsicht auf die Vorrichtung 2.

Die Vorrichtung 2 zum Transferieren von Blisterpackungen 4, 6 umfasst eine erste Übergabeeinheit 8, die die Blisterpackungen 4, 6 von einer Stanzstation 10 zu einer Zwischenablage 12 übergibt, sowie eine zweite Übergabeeinheit 14, die die Blisterpackungen 4, 6 von der Zwischenablage 12 an ein Fördermittel 16 übergibt. Die Transferrichtung der Blisterpackungen 4, 6 ist in den Figuren durch den Pfeil T gekennzeichnet.

Die Stanzstation 10, die Zwischenablage 12 und das Fördermittel 16 sind in den Figuren lediglich schematisch dargestellt. Üblicherweise werden im Bereich der Stanzstation 10 die Blisterpackungen 4, 6 unmittelbar nach dem Stanzvorgang bereitgestellt. Ebenso ist es jedoch möglich, dass im Ausgangsbereich der Stanzstation 10 ein Transportmittel (nicht dargestellt) vorgesehen ist, das die Blisterpackungen 4, 6 nach dem Stanzvorgang weiter transportiert, bis sie von der ersten Übergabeeinheit 8 ergriffen werden. Ein solches Transportmittel bewegt sich vorzugsweise getaktet und in Transferrichtung T. Schließlich ist es auch möglich, dass die Blisterpackungen 4, 6 nach dem Stanzvorgang zunächst in einem Zwischenspeicher (nicht dargestellt) gespeichert werden, aus dem die Übergabeeinheit 8 jeweils die oben bzw. vorne liegende Blisterpackung 4, 6 entnimmt.

Das Fördermittel 16 bewegt sich vorzugsweise in Transferrichtung T. Das Fördermittel 16 kann als eine umlaufende Packgutkette ausgebildet sein, die kontinuierlich oder vorzugsweise getaktet bewegt wird. Ebenso ist es denkbar, dass das Fördermittel 16 als ein Linearmotorsystem ausgebildet ist. Wenn das Fördermittel 16 getaktet bewegt wird oder wenn die einzelnen Schlitten des umlaufenden Linearmotorsystems an der Position, an der ihnen die Blisterpackungen 4, 6 zugeführt werden, während der Übergabe stillstehen, können in den Fächern des Fördermittels 16 Stapel von zwei oder mehr aufeinander liegenden Blisterpackungen 4, 6 gebildet werden. Es ist auch denkbar, die Blisterpackungen 4, 6 nicht direkt an das Fördermittel 16, sondern zunächst an einen Speicher (nicht dargestellt) zu übergeben.

Die erste Übergabeeinheit 8 weist einen ersten Saugerarm 18 und einen zweiten Saugerarm 19 auf. Der erste Saugerarm 18 und der zweite Saugerarm 19 sind quer zur Transferrichtung T (siehe Fig. 2) nebeneinander zu beiden Seiten der Längsmittelebene L der Vorrichtung 2 bzw. der Übergabeeinheit 8 angeordnet. Der erste Saugerarm 18 ist bewegbar zwischen einer Aufnahmestellung, die in Fig. 2 dargestellt ist, zum Aufnehmen einer ersten Blisterpackung 4 von einer ersten Bereitstellposition 20 in der Stanzstation 10 und einer Abgabestellung zum Ablegen der ersten Blisterpackung 4 in einer ersten Zwischenablageposition 22 auf der Zwischenablage 12.

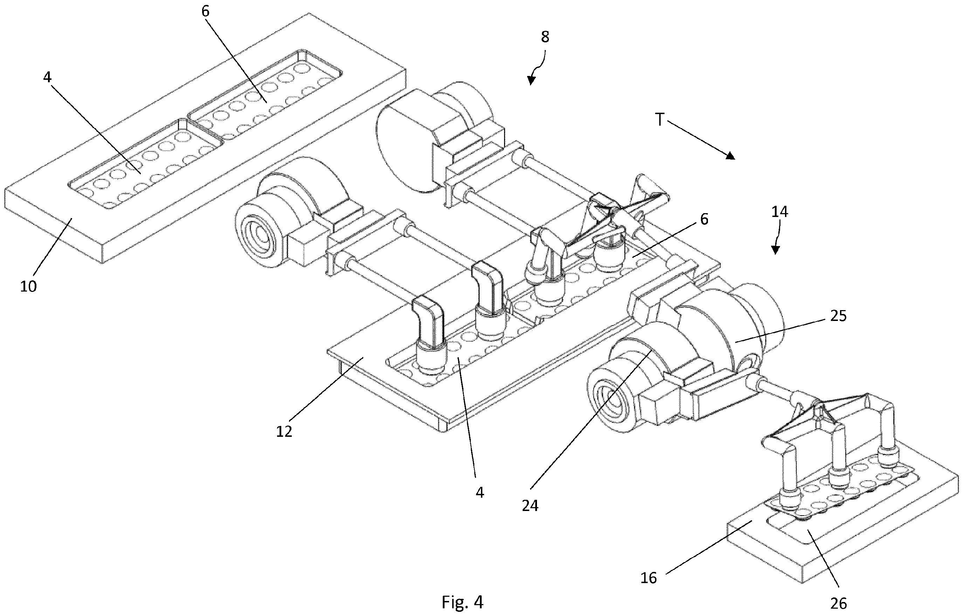

Ebenso ist der zweite Saugerarm 19 bewegbar zwischen einer Aufnahmestellung zum Aufnehmen einer zweiten Blisterpackung 6 von einer zweiten Bereitstellposition 21 (siehe Fig. 2) und einer Abgabestellung zum Ablegen der zweiten Blisterpackung 6 in einer zweiten Zwischenablageposition 23 auf der Zwischenablage 12. Die Abgabestellungen des ersten und zweiten Saugerarms 18, 19 der ersten Übergabeeinheit 8 sind in Fig. 4 dargestellt.

In der hier dargestellten bevorzugten Ausführungsform sind die Saugerarme 18, 19 spiegelsymmetrisch zur Längsmittelebene L ausgebildet und so angesteuert, dass sie eine synchrone Bewegung von der Aufnahmestellung zur Abgabestellung und zurück ausführen. Auf diese Weise werden die Blisterpackungen 4, 6 von den zwei Bereitstellpositionen 20, 21 in der Stanzstation 10 gleichzeitig von der ersten Übergabeeinheit 8 ergriffen und ebenfalls gleichzeitig in die beiden Zwischenablagepositionen 22, 23 auf der Zwischenablage 12 abgelegt. Neben der dargestellten Ausführungsform existieren viele weitere Möglichkeiten der Ausgestaltung der ersten Übergabeeinheit 8. Beispielsweise ist es denkbar, beide Blisterpackungen 4, 6 gleichzeitig mittels eines einzigen Saugerarms zu übergeben. Ebenso ist es denkbar, anstelle der Saugerarme 18, 19 Greifvorrichtungen einzusetzen. Schließlich ist es auch möglich, die beiden Blisterpackungen 4, 6 nicht gleichzeitig, sondern zeitlich versetzt zu übergeben.

Die zweite Übergabeeinheit 14 weist einen ersten Saugerarm 24 und einen zweiten Saugerarm 25 auf, die zu beiden Seiten der Längsmittelebene L der Vorrichtung 2 bzw. der Übergabeeinheit 14 in einer Reihe nebeneinander angeordnet sind. Der erste Saugerarm 24 ist bewegbar zwischen einer Aufnahmestellung (siehe Fig. 2) zum Aufnehmen der ersten Blisterpackung 4 von der ersten Zwischenablageposition 22 auf der Zwischenablage 12 und einer Abgabestellung (die zeitlich kurz nach der in Fig. 4 dargestellten Position erreicht wird) zum Ablegen der ersten Blisterpackung 4 in einer Endablageposition 26 auf dem Fördermittel 16.

Der zweite Saugerarm 25 der zweiten Übergabeeinheit 14 ist bewegbar zwischen einer Aufnahmestellung (die zeitlich kurz nach der in Fig. 4 dargestellten Position erreicht wird) zum Aufnehmen der zweiten Blisterpackung 6 von der zweiten Zwischenablageposition 23 auf der Zwischenablage 12 und einer Abgabestellung (siehe Fig. 2) zum Ablegen der zweiten Blisterpackung 6 in derselben Endablageposition 26, in der der erste Saugerarm 24 die ersten Blisterpackungen 4 ablegt.

Die beiden Saugerarme 24, 25 sind vorzugsweise spiegelsymmetrisch bezüglich der Längsmittelebene L der Vorrichtung 2 angeordnet und aufgebaut. Die beiden Saugerarme 24, 25 führen gegenläufige hin- und hergehende Schwenkbewegungen aus. Wenn der erste Saugerarm 24 sich in der Aufnahmestellung befindet, befindet sich der zweite Saugerarm 25 in seiner Abgabestellung oder zumindest in der Nähe der Abgabestellung. Wenn sich der erste Saugerarm 24 in der Abgabestellung befindet, befindet sich der zweite Saugerarm 25 in seiner Aufnahmestellung oder zumindest in der Nähe der Aufnahmestellung. Die Aufnahmestellung des ersten Saugerarms 24 unterscheidet sich räumlich von der Aufnahmestellung des zweiten Saugerarms 25. Ebenso unterscheidet sich die Abgabestellung des ersten Saugerarms 24 von der Abgabestellung des zweiten Saugerarms 25 aufgrund der Spiegelsymmetrie der Saugerarme 24, 25 bezüglich der Längsmittelebene L.

Die erste und zweite Bereitstellposition 20, 21 in der Stanzstation 10, die erste und zweite Zwischenablageposition 22, 23 auf der Zwischenablage 12 und die gemeinsame Endablageposition 26 auf dem Fördermittel 16 sind jeweils vorzugsweise in der Form der zu übergebenden Blisterpackungen 4, 6 ausgebildet. Bei herkömmlichen Blisterpackungen 4, 6 werden die genannten Positionen somit im Wesentlichen eine rechteckförmige Gestalt aufweisen. In der dargestellten Ausführungsform sind die oben genannten Positionen jeweils derart angeordnet, dass sich die längere Seite der Positionen quer zur Transferrichtung T erstreckt. Wie aus Fig. 2 ersichtlich ist, sind die erste und zweite Bereitstellposition 20, 21 bezüglich der Längsmittelebene L der Vorrichtung 2 nach außen versetzt angeordnet. Die erste und zweite Zwischenablageposition 22, 23 sind bezüglich der Längsmittelebene L nach außen versetzt angeordnet, vorzugsweise in einer bezüglich der Längsmittelebene L identischen Anordnung wie die erste und zweite Bereitstellposition 20, 21. Die gemeinsame Endablageposition 26 ist hingegen im Bereich der Längsmittelebene L angeordnet. In der hier dargestellten bevorzugten Ausführungsform ist die gemeinsame Endablageposition 26 derart symmetrisch zur Längsmittelebene L angeordnet, dass die Längsmittelebene L die Endablageposition 26 mittig schneidet.

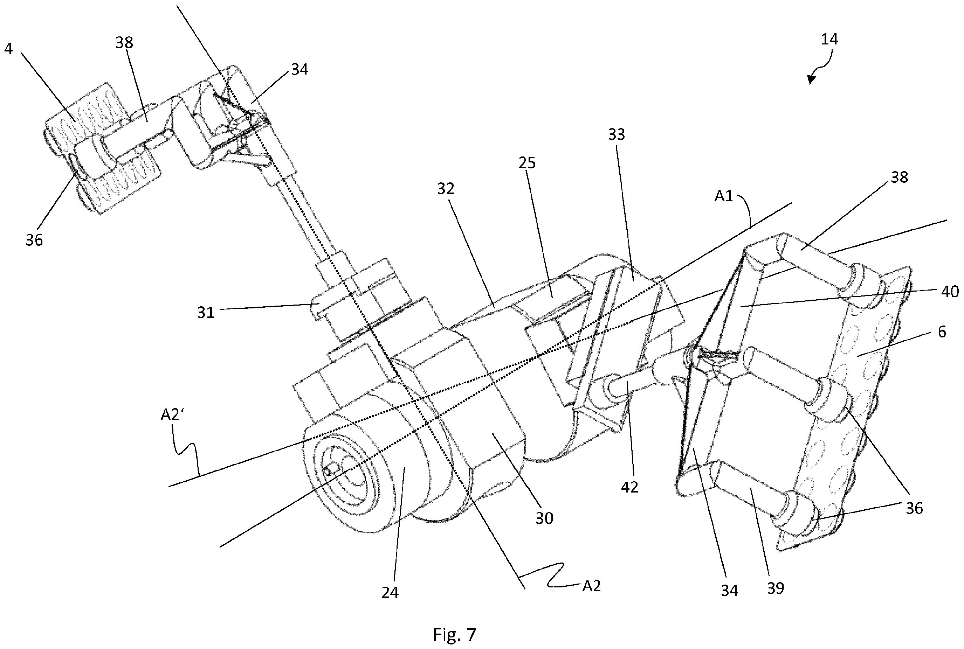

Bezug nehmend auf Fig. 7 bis 10 werden nun Details der zweiten Übergabeeinheit 14 näher beschrieben. Wie aus Fig. 7 hervorgeht, weist der erste Saugerarm 24 ein erstes Segment 30 und ein zweites Segment 31 auf. Das erste Segment 30 des ersten Saugerarms 24 ist um eine erste Achse A1, die senkrecht zur Längsmittelebene L verläuft, drehbar befestigt. Das erste Segment des ersten Saugerarms 24 weist einen Abschnitt auf, an dem das zweite Segment 31 drehbar um eine zur ersten Achse A1 im Wesentlichen senkrecht verlaufende ortsveränderliche zweite Achse A2 befestigt ist. An dem zweiten Segment 31 ist eine Saugvorrichtung 34 zum Ansaugen und Halten der Blisterpackung 4 angeordnet.

Der zweite Saugerarm 25 weist ebenfalls ein erstes Segment 32 und ein zweites Segment 33 auf. Das erste Segment 32 des zweiten Saugerarms 25 ist um dieselbe erste Achse A1 drehbar befestigt. Das erste Segment 32 des zweiten Saugerarms 25 weist außerdem einen Abschnitt auf, an dem das zweite Segment 33 drehbar um eine weitere zur ersten Achse A1 im Wesentlichen senkrecht verlaufende ortsveränderliche zweite Achse A2' befestigt ist. An dem zweiten Segment 33 ist ebenfalls eine Saugvorrichtung 34 zum Ansaugen und Halten einer Blisterpackung 6 angeordnet.

Die Saugerarme 24, 25 sind derart ausgestaltet und angesteuert, dass die Bewegung der Saugerarme 24, 25 von ihrer jeweiligen Aufnahmestellung zu ihrer jeweiligen Abgabestellung und zurück eine kombinierte Bewegung ist, die sich zumindest aus einer ersten Drehbewegung des ersten Segments 30, 32 und des zweiten Segments 31, 33 um die erste Achse A1 und einer zweiten Drehbewegung des zweiten Segments 31, 33 um die jeweils zugehörige zweite Achse A2, A2' zusammensetzt.

Wie aus Fig. 2 hervorgeht, ist die zweite Achse A2 des ersten Saugerarms 24 derart angeordnet, dass sie sich während der ersten Drehbewegung um die erste Achse A1 in einer ersten Ebene E1 bewegt, die die erste Zwischenablageposition 22 oder deren seitliche Projektion in einer ersten geraden Linie L1 schneidet. Diese erste gerade Linie L1 ist seitlich versetzt zur Mitte M1 der ersten Zwischenablageposition 22 angeordnet. Der seitliche Versatz dieser ersten geraden Linie L1 erfolgt ausgehend von der Mitte M1 der ersten Zwischenablageposition 22 in Richtung der Längsmittelebene L.

Die zweite Achse A2' des zweiten Saugerarms 25 ist derart angeordnet, dass sie sich während der ersten Drehbewegung des zweiten Saugerarms 25 um die erste Achse A1 in einer zweiten Ebene E2 bewegt, die die zweite Zwischenablageposition 23 oder deren seitliche Projektion in einer zweiten geraden Linie L2 schneidet, die seitlich versetzt zur Mitte M2 der zweiten Zwischenablageposition 23 ist. Auch hier ist der seitliche Versatz, ausgehend von der Mitte M2 der zweiten Zwischenablageposition 23, zur Längsmittelebene L hin gerichtet.

Bezug nehmend auf Fig. 7 umfasst die Saugvorrichtung 34 jedes Saugerarms 24, 25 mehrere Saugköpfe 36, die mittels eines Trägerarms 38 am zweiten Segment 31, 33 befestigt sind. Es ist auch möglich, dass lediglich ein Saugkopf 36 je Saugvorrichtung 34 vorhanden ist. Bei Vorliegen von mehreren Saugköpfen 36 können auch mehrere separate Trägerarme 38 zur Verbindung mit dem zweiten Segment 31, 33 vorliegen. In der dargestellten Ausführungsform ist der Trägerarm 38 rechenförmig ausgebildet und umfasst mehrere Finger 39, an deren Spitze jeweils ein Saugkopf 36 angeordnet ist. Der Trägerarm 38 ist vorzugsweise starr am zweiten Segment 31, 33 befestigt. In der dargestellten Ausführungsform ragen die Finger 39 des Trägerarms 38 von einer gemeinsamen Verbindungsstrebe 40 senkrecht ab. Die Verbindungsstrebe 40 ist wiederum mittels eines senkrecht zu ihr verlaufenden Verbindungsglieds 42 mit dem zweiten Segment 31, 33 verbunden. In der dargestellten Ausführungsform ist das Verbindungsglied 42 des Trägerarms 38 senkrecht mit dem zweiten Segment 31, 33 verbunden. Ebenso ist es denkbar, dass das Verbindungsglied 42 und somit der Trägerarm 38 schräg vom zweiten Segment 31, 33 abragt. In der jeweiligen Aufnahmestellung und Abgabestellung der Saugerarme 24, 25 ragt das Verbindungsglied 42 und somit der Trägerarm 38 jeweils schräg nach unten ab. Auf diese Weise könnte der Winkel, den der jeweilige Saugerarm 24, 25 um die erste Achse A1 zurücklegen muss, reduziert werden.

Wie aus Fig. 2 und 7 hervorgeht, ist das zweite Segment 31, 33 des ersten oder zweiten Saugerarms 24, 25 in der jeweiligen Aufnahmestellung bezüglich der Längsmittelebene L nach außen geschwenkt. Konkret ist der Abschnitt des zweiten Segments 31, 33 nach außen geschwenkt, an dem der Trägerarm 38 befestigt ist. Ebenso ist erkennbar, dass das zweite Segment 31, 33 des ersten oder zweiten Saugerarms 24, 25, konkret derjenige Abschnitt des zweiten Segments 31, 33, an dem der Trägerarm 38 befestigt ist, in der jeweiligen Abgabestellung bezüglich der Längsmittelebene L nach innen geschwenkt ist.

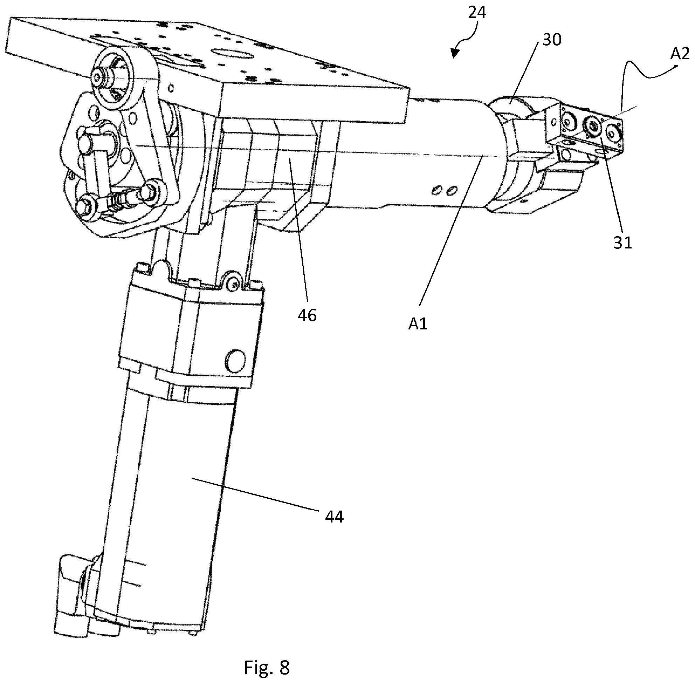

Bezug nehmend auf Fig. 8 bis 10 werden nun Details eines möglichen Antriebs für den Saugerarm 24 beschrieben.

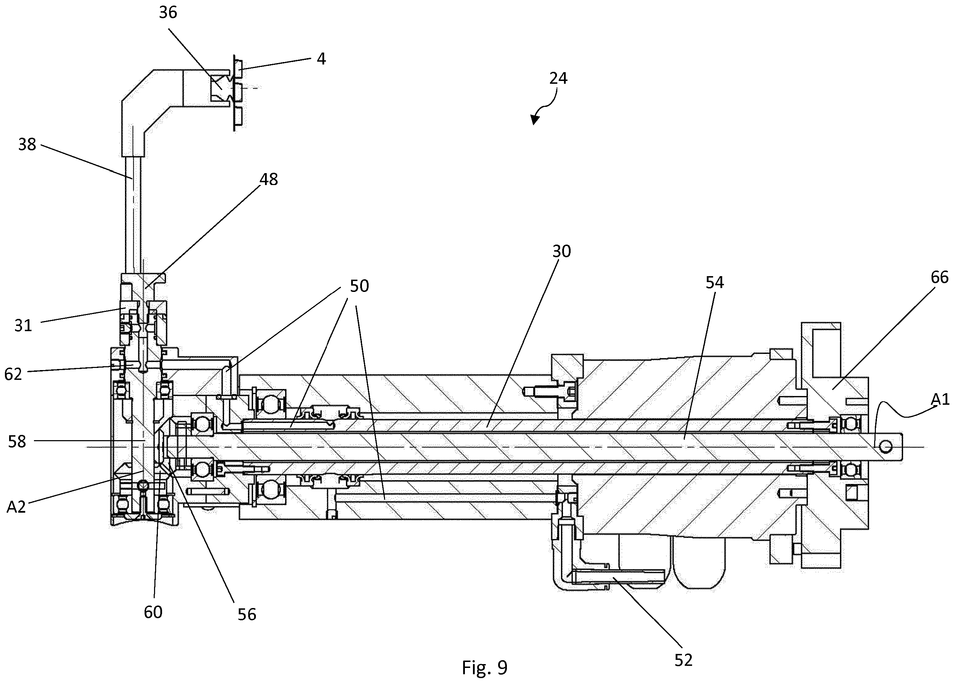

In Fig. 8 ist ein Motor 44 erkennbar, der über ein Getriebe 46 das erste Segment 30 um die erste Achse A1 hin- und zurückschwenkt. Das um die zweite Achse A2 schwenkbare zweite Segment 31 ist ohne die daran befestigte Saugvorrichtung 34 dargestellt. Die Saugvorrichtung 34 ist vorzugsweise ein Formatteil, das je nach Art und Größe der zu übergebenden Blisterpackungen 4, 6 ausgetauscht werden kann. Zur lösbaren Befestigung des Trägerarms 38 der Saugvorrichtung 34 am zweiten Segment 31 ist vorzugsweise eine Rändelschraube 48 (siehe Fig. 9) vorgesehen. Zur weiteren Anpassung an unterschiedliche Formate können die Saugerarme 24, 25 auch parallel zur ersten Achse A1 verschiebbar gelagert sein, und/oder in Längsrichtung verschiebbar sein.

In der Querschnittsansicht nach Fig. 9 sind der Motor 44 und das Getriebe 46 nicht dargestellt. Vom Motor 44 wird das erste Segment 30 des Saugerarms 24, das als Hohlwelle ausgebildet ist, angetrieben. Bei Betätigung des Motors 44 wird das erste Segment 30 um die erste Achse A1 hin- und hergeschwenkt. Das zweite Segment 31 ist in einem Abschnitt des ersten Segments 30 um die zweite Achse A2 drehbar gelagert. Im ersten Segment 30 sind Luftkanäle 50 enthalten, die mit einem Vakuumanschluss 52 für die Saugköpfe 36 verbunden sind. Im Inneren des ersten Segments 30 ist zudem eine Welle 54 angeordnet, an deren einem Ende, das dem zweiten Segment 31 zugewandt ist, ein Kegelrad 56 starr befestigt ist.

Das zweite Segment 31 umfasst eine zentrale Welle 58, die drehbar in dem Endabschnitt des ersten Segments 30 gelagert ist und sich bei einer Drehbewegung des ersten Segments 30 um die erste Achse A1 mit dem ersten Segment 30 mitdreht. Fest mit der Welle 58 ist ein weiteres Kegelrad 60 verbunden, das bei einer Drehbewegung des ersten und zweiten Segments 30, 31 um die erste Achse A1 mit dem Kegelrad 56 kämmt. Eine Ringnut 62 in der Welle 58 dient zur Herstellung einer Verbindung mit den Luftkanälen 50 im ersten Segment 30 auch während einer Drehbewegung des zweiten Segments 31 um die zweite Achse A2.

Wenn nun das erste Segment 30 und somit auch das zweite Segment 31 um die erste Achse A1 verschwenkt werden, läuft das Kegelrad 60 am unbewegten Kegelrad 56 ab und versetzt somit die Welle 58 in eine Drehbewegung um die zweite Achse A2. Bei einer Übersetzung von 1:1 zwischen den Kegelrädern 56, 60 bringt somit eine Schwenkung des ersten Segments 30 und des zweiten Segments 31 um die erste Achse A1 um 180°, wie sie bei den in Fig. 1 bis 6 dargestellten Übergabeprozessen gewünscht ist, ebenfalls eine Drehung des zweiten Segments 31 um die zweite Achse A2 um 180° mit sich. Somit führt das zweite Segment 31 und die an der Saugvorrichtung 34 gehaltene Blisterpackung 4 eine Drehbewegung um die zweite Achse A2 von im Wesentlichen 180° aus, wenn sich der Saugerarm 24 von seiner Aufnahmestellung zu seiner Abgabestellung oder umgekehrt bewegt. Wenn die Saugvorrichtung 34 in der Aufnahmestellung und der Abgabestellung schräg nach unten abragt, kann das erste Segment 30 bei der Schwenkbewegung um die erste Achse A1 auch nur einen Winkelbereich von weniger als 180°, bis hin zu 120°, überstreichen. In diesem Fall müsste die Übersetzung zwischen den Kegelrädern 56, 60 entsprechend angepasst werden, weil das zweite Segment 31 in jedem Fall eine Drehbewegung um die zweite Achse A2 um 180° vollziehen muss.

Die Drehbewegung des zweiten Segments 31 um die zweite Achse A2 in Kombination mit der Schwenkbewegung um die erste Achse A1 bewirkt, dass die jeweilige Blisterpackung 4 von dem Saugkopf 36 an einer Seite, vorzugsweise an der ebenen Fläche der Deckfolienseite, ergriffen und anschließend von oben in die Endablageposition 26 abgelegt werden kann. Dabei vollzieht die Blisterpackung 4 eine 180°-Drehung um ihren Mittelpunkt.

Abweichend vom bisher dargestellten Grundprinzip ist es gewünscht, dass das zweite Segment 31 in den Endbereichen der Schwenkbewegung um die erste Achse A1 keine Drehbewegung um die zweite Achse A2 vollzieht. Dies ist darin begründet, dass für ein gezieltes Aufnehmen und Ablegen der Blisterpackungen 4 ein geradliniges Anheben und Absenken der Blisterpackungen 4 in den Endbereichen der Bewegung vorteilhaft ist. Zur Erreichung dieses Zwecks kann in der zweiten Übergabeeinheit 14 ein Mechanismus 64 zur Anpassung des Drehverlaufs des zweiten Segments 31 um die zweite Achse A2 vorgesehen sein.

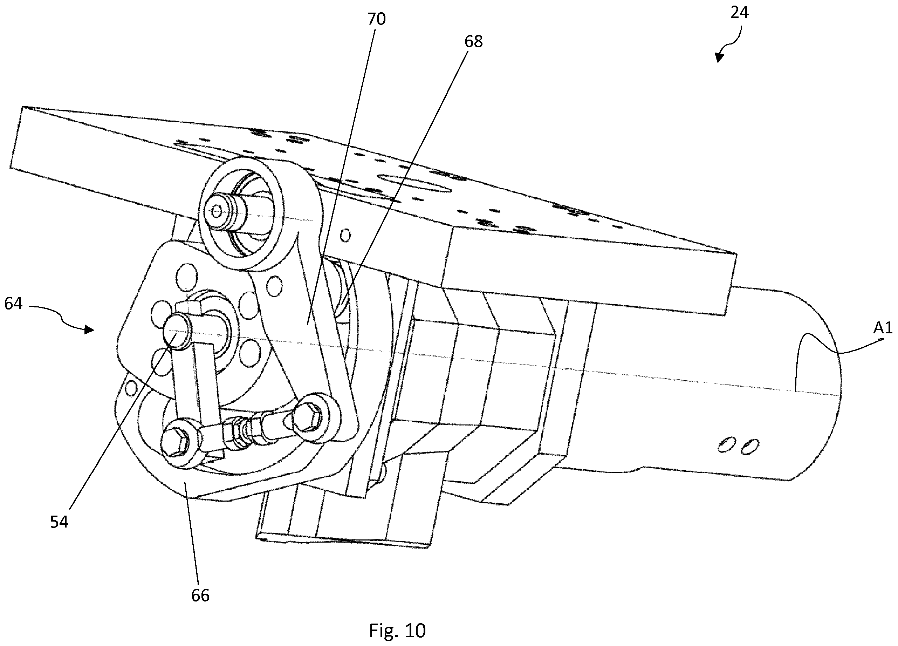

Dieser Mechanismus 64 wird nun unter Bezugnahme auf Fig. 10 näher beschrieben. In Fig. 10 ist das Ende des ersten Segments 30, an dem das zweite Segment 31 sowie die Saugvorrichtung 34 befestigt sind, aus Zwecken der Übersichtlichkeit nicht dargestellt. Der Mechanismus 64 umfasst eine Kurvenscheibe 66, die gemeinsam mit dem ersten Segment 30 um die erste Achse A1 gedreht wird. In der Querschnittsansicht in Fig. 9 ist diese Kurvenscheibe 66 ebenfalls gezeigt, allerdings ohne die weiteren Komponenten des Mechanismus 64.

Wieder Bezug nehmend auf Fig. 10 umfasst der Mechanismus 64 des Weiteren eine Kurvenrolle 68, die drehbar an einem Hebelmechanismus 70 angelenkt ist. Der Hebelmechanismus 70 wiederum ist mit der inneren Welle 54 starr verbunden, an deren anderem Ende das Kegelrad 56 angeordnet ist. Bei Drehung der Kurvenscheibe 66 um die erste Achse A1 läuft die Kurvenrolle 68 an der Kurvenscheibe 66 ab und bewirkt somit eine entsprechende Auslenkung des Hebelmechanismus 70, was wiederum zu einer Drehung der Welle 54 um die erste Achse A1 führt. Der Mechanismus 64 ist so gestaltet, dass sich die Welle 54 und somit das Kegelrad 56 in den Anfangs- und Endbereichen der Drehbewegung des ersten Segments 30 und somit der Kurvenscheibe 66 um die erste Achse A1 mit derselben Winkelgeschwindigkeit wie das erste Segment 30 mitbewegen. Auf diese Weise erfolgt zwischen Kegelrad 56 und Kegelrad 60 keine Relativbewegung, sodass auch keine Drehbewegung des zweiten Segments 31 um die zweite Achse A2 initiiert wird.

Im weiteren Verlauf der Schwenkbewegung um die erste Achse A1 hingegen wird durch den Mechanismus 64 eine gegenläufige Bewegung der Welle 54 entgegen der Drehrichtung des ersten Segments 30 bewirkt, wodurch die Drehgeschwindigkeit des zweiten Segments 31 um die zweite Achse A2 bereichsweise schneller ist als die Drehbewegung um die erste Achse A1. Auf diese Weise gelingt es, an den Endpunkten der Schwenkbewegung um die erste Achse A1 die Drehbewegung des zweiten Segments 31 um die zweite Achse A2 auszusetzen und dies in einem Mittelbereich der Schwenkbewegung um die erste Achse A1 durch schnellere Drehung des zweiten Segments 31 um die zweite Achse A2 wieder auszugleichen. Dadurch wird gewährleistet, dass die Blisterpackungen 4 immer eine Drehbewegung um die zweite Achse A2 um 180° vollziehen.

Selbstverständlich existieren vielfältige Modifikationen der bislang beschriebenen Struktur des Saugerarms 24 und des zugehörigen Antriebs. So kann beispielsweise die Kopplung zwischen der Schwenkbewegung des ersten Segments 30 um die erste Achse A1 und der Drehbewegung des zweiten Segments 31 um die zweite Achse A2 auch mittels anderer mechanischer Komponenten gelöst werden. Außerdem ist es denkbar, zwei separate Servomotoren für den Antrieb des ersten Segments 30 und des zweiten Segments 31 vorzusehen.

Der Aufbau des Saugerarms 25 ist spiegelsymmetrisch zum Saugerarm 24, wobei das erste Segment mit 32, das zweite Segment mit 33 und die zweite Achse mit A2' bezeichnet sind.

Bezugnehmend auf Fig. 1 bis 6 soll nun der Ablauf eines Übergabeprozesses mit der beschriebenen Vorrichtung 2 näher erläutert werden. Die Blisterpackungen 4, 6 werden an den beiden Bereitstellpositionen 20, 21 in der Stanzstation 10 gleichzeitig durch den ersten und zweiten Saugerarm 18, 19 der ersten Übergabeeinheit 8 aufgenommen, zur ersten und zweiten Zwischenablageposition 22, 23 bewegt und dort abgelegt. Die Blisterpackungen 4, 6 werden in den Bereitstellpositionen 20, 21 vorzugsweise von der ersten Übergabeeinheit 8 von oben aufgenommen und ebenfalls von oben in den Zwischenablagepositionen 22, 23 auf die Zwischenablage 12 abgelegt.

Aufgrund der kombinierten Drehbewegungen um die zwei zueinander senkrechten Achsen werden die Blisterpackungen 4, 6, die in den Bereitstellpositionen 20, 21 in einer Reihe zu beiden Seiten der Längsmittelebene L angeordnet sind, in den Zwischenablagepositionen 22, 23 im Vergleich zu den Bereitstellpositionen 20, 21 mit derselben Seite nach oben, aber um 180° um ihre Mittelpunkte gedreht abgelegt. Gegebenenfalls ist es auch möglich, dass die Blisterpackungen 4, 6 nicht in einer horizontalen Ausrichtung an den Bereitstellpositionen 20, 21 liegen, sondern beispielsweise in einer senkrechten Ausrichtung oder unter einem schrägen Winkel zur Vertikalen bereitgestellt werden. In diesem Fall vollziehen die Saugerarme 18, 19 eine Schwenkbewegung um die erste Achse lediglich über einen Winkel, der kleiner als 180° ist, in der Regel zwischen 60° und 180°.

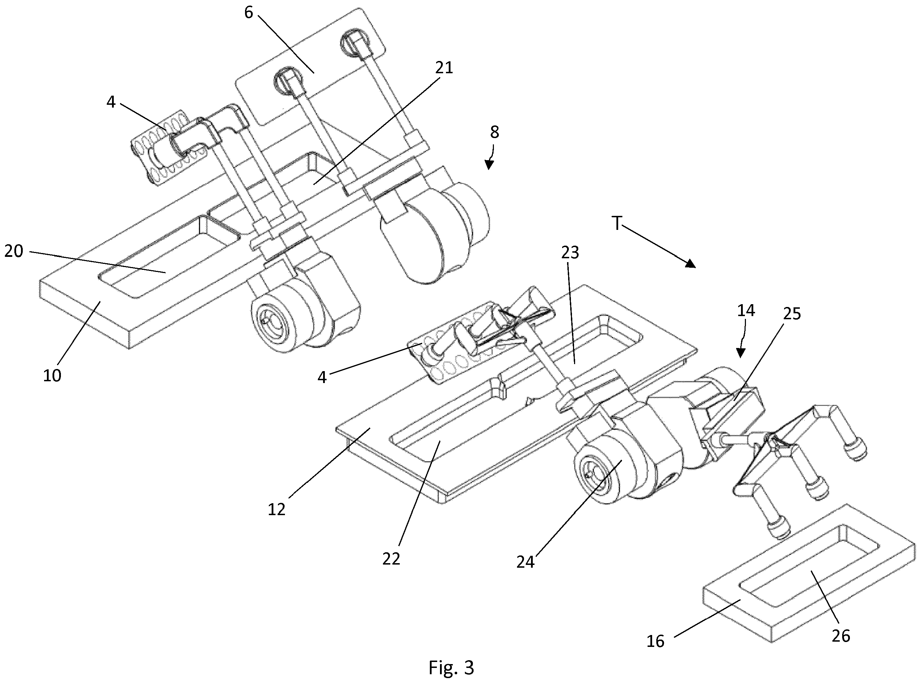

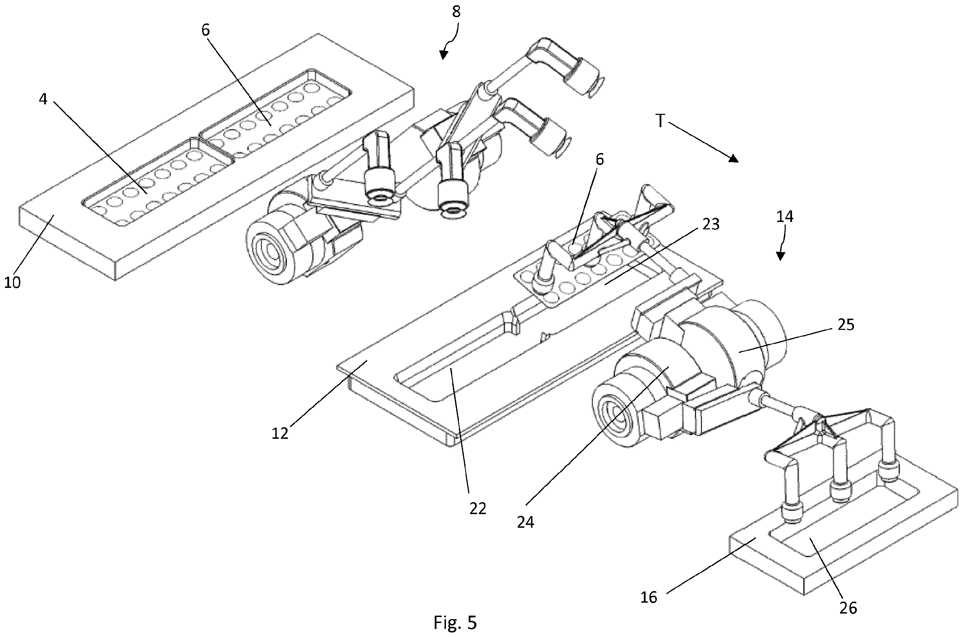

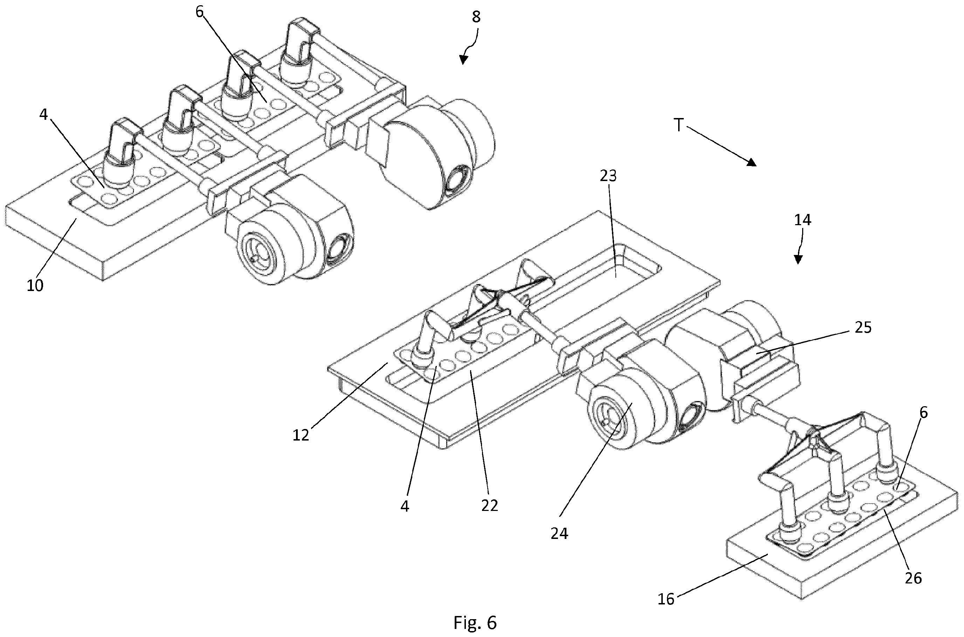

Fig. 1 zeigt die Blisterpackungen 4, 6 unmittelbar nach Verlassen der Bereitstellpositionen 20, 21. In Fig. 3 befinden sich die Blisterpackungen 4, 6 auf dem Weg von den Bereitstellpositionen 20, 21 zu den Zwischenablagepositionen 22, 23, wo sie in Fig. 4 abgelegt werden. In Fig. 5 befinden sich die Saugerarme 18, 19 auf dem Weg zurück zu ihren Aufnahmestellungen, und in Fig. 6 beginnt der Übergabezyklus wieder von vorne.

Wie zuvor bereits erläutert wurde, könnte anstelle der beiden gleichsinnig bewegten Saugerarme 18, 19 auch ein einziger Saugerarm für die Übergabe beider Blisterpackungen 4, 6 von der Stanzstation 10 zur Zwischenablage 12 verwendet werden. Ebenso ist es denkbar, dass keine gleichzeitige Übergabe der Blisterpackungen 4, 6 mittels der ersten Übergabeeinheit 8 stattfindet, sondern eine gegenläufige Bewegung der Saugerarme 18, 19.

Sobald die Blisterpackungen 4, 6 in den Zwischenablagepositionen 22, 23 bereitliegen, kann die erste Blisterpackung 4 dort von dem ersten Saugerarm 24 der zweiten Übergabeeinheit 14 ergriffen und zur Endablageposition 26 transferiert werden. Die erste Blisterpackung 4 wird in der ersten Zwischenablageposition 22 von oben aufgenommen und ebenfalls von oben in der Endablageposition 26 auf das Fördermittel 16 abgelegt. Die erste Blisterpackung 4 ist dabei in der ersten Zwischenablageposition 22 bezüglich der Längsmittelebene L nach außen versetzt angeordnet und in der Endablageposition 26 im Bereich der Längsmittelebene L angeordnet. Die erste Blisterpackung 4 wird in der Endablageposition 26 im Vergleich zur ersten Zwischenablageposition 22 mit derselben Seite nach oben, aber um 180° um ihren Mittelpunkt gedreht abgelegt. Fig. 1 zeigt die erste Blisterpackung kurz nach deren Ergreifen an der ersten Zwischenablageposition 22. In Fig. 3 befindet sich die erste Blisterpackung 4 auf dem Weg von der ersten Zwischenablageposition 22 zur Endablageposition 26, wo sie kurz nach dem in Fig. 4 dargestellten Zeitpunkt abgelegt wird. In Fig. 5 ist der erste Saugerarm 24 kurz nach dem Ablegevorgang dargestellt, während er sich bereits wieder auf dem Rückweg in seine Aufnahmestellung befindet. In Fig. 6 beginnt der Zyklus wieder von vorne. Der Vorgang wird so oft wiederholt wie gewünscht.

Für die Übergabe der zweiten Blisterpackung 6 aus der zweiten Zwischenablageposition 23 hin zur gemeinsamen Endablageposition 26 mittels des zweiten Saugerarms 25 gelten exakt dieselben Aussagen wie für die Übergabe der ersten Blisterpackung 4 mittels des ersten Saugerarms 24. Lediglich die Zeitpunkte des Aufnehmens der Blisterpackung 6 und des Ablegens der Blisterpackung 6 sind im Wesentlichen gegenläufig zu den Zeitpunkten, an denen die erste Blisterpackung 4 aufgenommen und abgelegt wird. Die beiden Saugerarme 24, 25 vollziehen eine Schwenkbewegung um dieselbe erste Achse A1, während die Drehbewegungen ihrer zweiten Segmente 31, 33 um die jeweilige zweite Achse A2, A2' zueinander entgegengesetzte Drehrichtungen zeigen. An einem Scheitelpunkt der Drehbewegung, wie sie im Querschnitt in Fig. 9 dargestellt ist, sind die Blisterpackungen vorzugsweise parallel zur Längsmittelebene L angeordnet.

Die Zeitpunkte des Aufnehmens der Blisterpackungen 4, 6 von den Zwischenablagepositionen 22, 23 müssen mit den Zeitpunkten des Ablegens der Blisterpackungen 4, 6 auf den Zwischenablagepositionen 22, 23 durch die erste Übergabeeinheit 8 koordiniert sein. Um den Durchsatz zu erhöhen, kann es sinnvoll sein, dass der entsprechende Saugerarm 24, 25 der zweiten Übergabeeinheit 14 die entsprechende Blisterpackung 4, 6 bereits an der Zwischenablageposition 22, 23 aufnimmt, während der entsprechende Saugerarm 18, 19 der ersten Übergabeeinheit 24 sich noch im Bereich der Zwischenablageposition 22, 23 befindet. Für einen solchen Fall ist es notwendig, dass die Saugerarme 18, 19, 24, 25 eine Geometrie aufweisen, die es ermöglicht, dass die Saugvorrichtungen 34 der Saugerarme 18, 19, 24, 25 im Bereich der Zwischenablagepositionen 22, 23 versetzt zueinander sind, siehe Fig. 4.

Der Aufbau und Antrieb der Saugerarme 18, 19 der ersten Übergabeeinheit 8 ist vorzugsweise im Wesentlichen identisch zur Struktur und zum Antrieb der Saugerarme 24, 25 der zweiten Übergabeeinheit 14, wie sie oben detailliert beschrieben wurden. Lediglich die Ebenen, in denen sich die zweiten Achsen der Saugerarme 18, 19 bewegen, schneiden die Bereitstellpositionen 20, 21 sowie die Zwischenablagepositionen 22, 23 in geraden Linien, die mittig bezüglich der Bereitstellpositionen 20, 21 und der Zwischenablagepositionen 22, 23 sind. Auf diese Weise entfällt der seitliche Versatz der Blisterpackungen 4, 6 während der Übergabe.

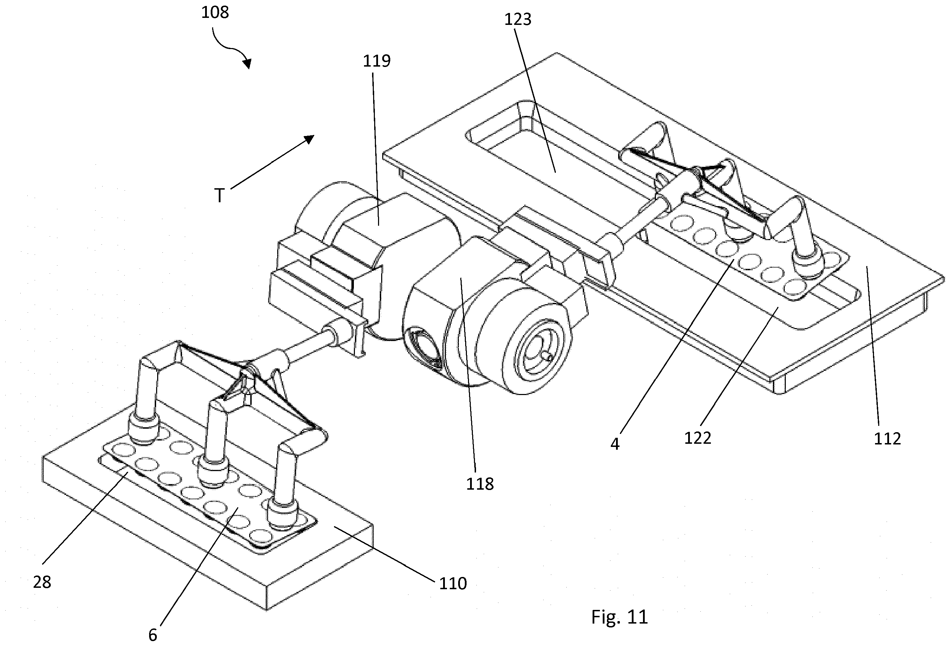

Fig. 11 bis 14 zeigen eine alternative Ausgestaltung der ersten Übergabeeinheit, hier mit 108 bezeichnet. Im Vergleich zur zuvor beschriebenen Ausgestaltung der ersten Übergabeeinheit werden die Blisterpackungen 4, 6 in dieser Ausgestaltung in einer gemeinsamen Bereitstellposition 28 in der Stanzstation 10 bereitgestellt und in den Zwischenablagepositionen 122, 123 mit einem seitlichen Versatz abgelegt.

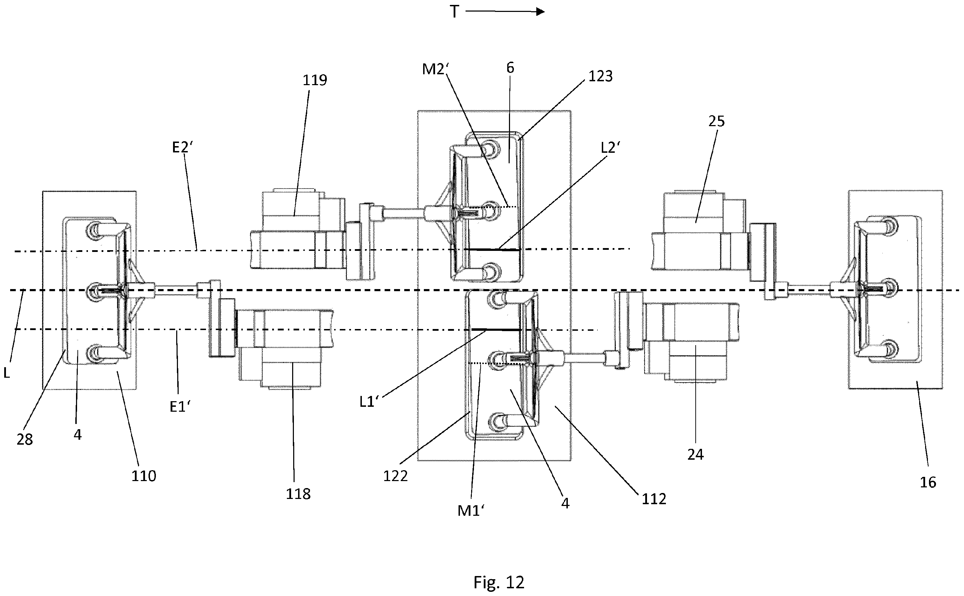

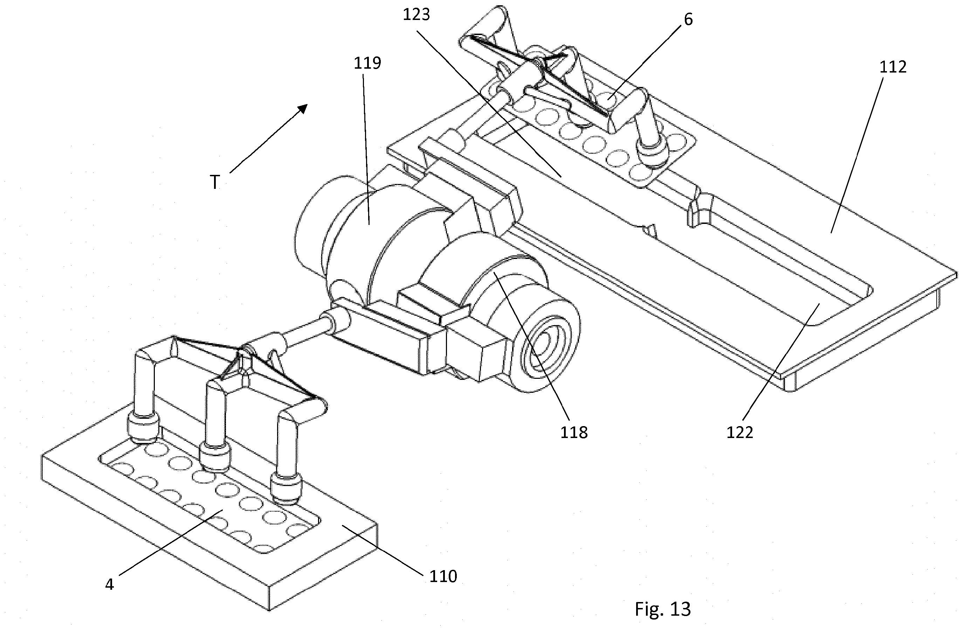

Diese Ausgestaltung der ersten Übergabeeinheit 108 weist einen ersten Saugerarm 118 und einen zweiten Saugerarm 119 auf, die zu beiden Seiten der Längsmittelebene L der Vorrichtung 2 bzw. der Übergabeeinheit 108 in einer Reihe nebeneinander angeordnet sind. Der erste Saugerarm 118 ist bewegbar zwischen einer Aufnahmestellung (siehe Fig. 12 und 13) zum Aufnehmen der ersten Blisterpackung 4 von der gemeinsamen Bereitstellposition 28 und einer Abgabestellung (die zeitlich kurz nach der in Fig. 11 dargestellten Position erreicht wird) zum Ablegen der ersten Blisterpackung 4 in einer ersten Zwischenablageposition 122 auf der Zwischenablage 112.

Der zweite Saugerarm 119 ist bewegbar zwischen einer Aufnahmestellung (siehe Fig. 11) zum Aufnehmen der zweiten Blisterpackung 6 von der Bereitstellposition 28 und einer Abgabestellung (die zeitlich kurz nach der in Fig. 13 dargestellten Position erreicht wird) zum Ablegen der zweiten Blisterpackung 6 in einer zweiten Zwischenablageposition 123.

Die beiden Saugerarme 118, 119 sind vorzugsweise spiegelsymmetrisch bezüglich der Längsmittelebene L der Vorrichtung 2 bzw. der Übergabeeinheit 108 angeordnet und aufgebaut. Die beiden Saugerarme 118, 119 führen gegenläufige hin- und hergehende Schwenkbewegungen aus. Wenn der erste Saugerarm 118 sich in der Aufnahmestellung befindet, befindet sich der zweite Saugerarm 119 in seiner Abgabestellung oder zumindest in der Nähe der Abgabestellung. Wenn sich der erste Saugerarm 118 in der Abgabestellung befindet, befindet sich der zweite Saugerarm 119 in seiner Aufnahmestellung oder zumindest in der Nähe der Aufnahmestellung. Die Abgabestellung des ersten Saugerarms 118 unterscheidet sich räumlich von der Abgabestellung des zweiten Saugerarms 119. Ebenso unterscheidet sich die Aufnahmestellung des ersten Saugerarms 118 von der Aufnahmestellung des zweiten Saugerarms 119 aufgrund der Spiegelsymmetrie der Saugerarme 118, 119 bezüglich der Längsmittelebene L.

Die erste und zweite Zwischenablageposition 122, 123 auf der Zwischenablage 112 entsprechen von ihrer Form und Anordnung den Zwischenablagepositionen 22, 23 der zuvor beschriebenen Ausführungsform. Wie aus Fig. 12 ersichtlich ist, sind die erste und zweite Zwischenablageposition 122, 123 bezüglich der Längsmittelebene L nach außen versetzt angeordnet. Die gemeinsame Bereitstellposition 28 ist hingegen im Bereich der Längsmittelebene L angeordnet. In der hier dargestellten bevorzugten Ausführungsform ist die gemeinsame Bereitstellposition 28 derart symmetrisch zur Längsmittelebene L angeordnet, dass die Längsmittelebene L die Bereitstellposition 28 mittig schneidet.

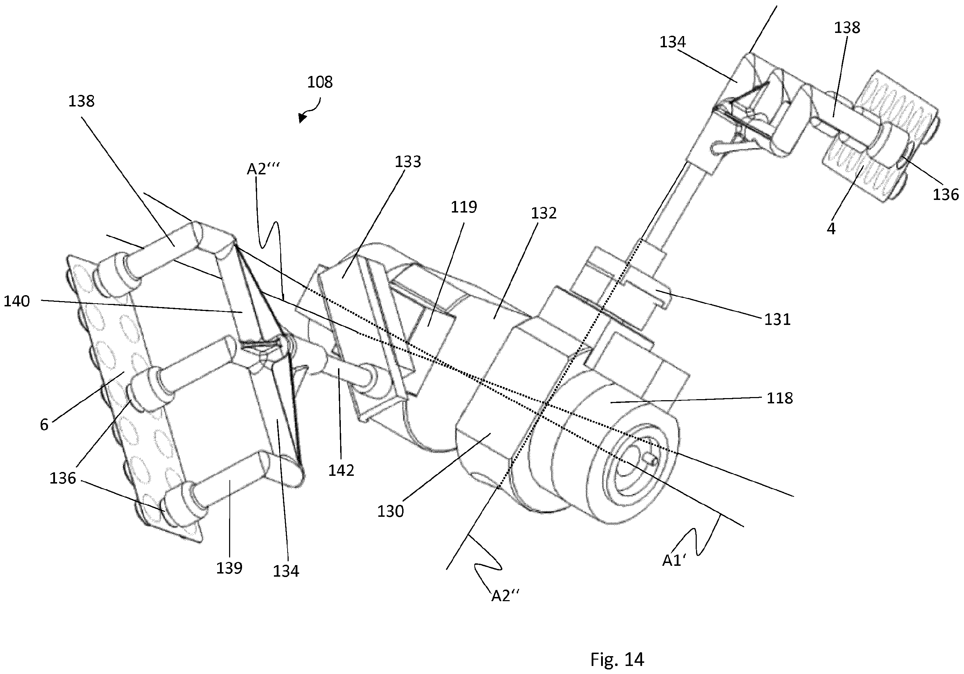

Bezug nehmend auf Fig. 14 werden nun Details der Übergabeeinheit 108 näher beschrieben. Wie aus Fig. 14 hervorgeht, weist der erste Saugerarm 118 ein erstes Segment 130 und ein zweites Segment 131 auf. Das erste Segment 130 des ersten Saugerarms 118 ist um eine erste Achse A1', die senkrecht zur Längsmittelebene L verläuft, drehbar befestigt. Das erste Segment 130 des ersten Saugerarms 118 weist einen Abschnitt auf, an dem das zweite Segment 131 drehbar um eine zur ersten Achse A1' im Wesentlichen senkrecht verlaufende ortsveränderliche zweite Achse A2" befestigt ist. An dem zweiten Segment 131 ist eine Saugvorrichtung 134 zum Ansaugen und Halten der Blisterpackung 4 angeordnet.

Der zweite Saugerarm 119 weist ebenfalls ein erstes Segment 132 und ein zweites Segment 133 auf. Das erste Segment 132 des zweiten Saugerarms 119 ist um dieselbe erste Achse A1' drehbar befestigt. Das erste Segment 132 des zweiten Saugerarms 119 weist außerdem einen Abschnitt auf, an dem das zweite Segment 133 drehbar um eine weitere zur ersten Achse A1' im Wesentlichen senkrecht verlaufende ortsveränderliche zweite Achse A2'" befestigt ist. An dem zweiten Segment 133 ist ebenfalls eine Saugvorrichtung 134 zum Ansaugen und Halten einer Blisterpackung 6 angeordnet.

Die Saugerarme 118, 119 sind derart ausgestaltet und angesteuert, dass die Bewegung der Saugerarme 118, 119 von ihrer jeweiligen Aufnahmestellung zu ihrer jeweiligen Abgabestellung und zurück eine kombinierte Bewegung ist, die sich zumindest aus einer ersten Drehbewegung des ersten Segments 130, 132 und des zweiten Segments 131, 133 um die erste Achse A1' und einer zweiten Drehbewegung des zweiten Segments 131, 133 um die jeweils zugehörige zweite Achse A2", A2'" zusammensetzt.

Wie aus Fig. 12 hervorgeht, ist die zweite Achse A2" des ersten Saugerarms 118 derart angeordnet, dass sie sich während der ersten Drehbewegung um die erste Achse A1' in einer ersten Ebene E1' bewegt, die die erste Zwischenablageposition 122 oder deren seitliche Projektion in einer ersten geraden Linie L1' schneidet. Diese erste gerade Linie L1' ist seitlich versetzt zur Mitte M1' der ersten Zwischenablageposition 122 angeordnet. Der seitliche Versatz dieser ersten geraden Linie L1' erfolgt ausgehend von der Mitte M1' der ersten Zwischenablageposition 122 in Richtung der Längsmittelebene L.

Die zweite Achse A2'" des zweiten Saugerarms 119 ist derart angeordnet, dass sie sich während der ersten Drehbewegung des zweiten Saugerarms 119 um die erste Achse A1' in einer zweiten Ebene E2' bewegt, die die zweite Zwischenablageposition 123 oder deren seitliche Projektion in einer zweiten geraden Linie L2' schneidet, die seitlich versetzt zur Mitte M2' der zweiten Zwischenablageposition 123 ist. Auch hier ist der seitliche Versatz, ausgehend von der Mitte M2' der zweiten Zwischenablageposition 123, zur Längsmittelebene L hin gerichtet.

Bezug nehmend auf Fig. 14 umfasst die Saugvorrichtung 134 jedes Saugerarms 118, 119 mehrere Saugköpfe 136, die mittels eines Trägerarms 138 am zweiten Segment 131, 133 befestigt sind. Es ist auch möglich, dass lediglich ein Saugkopf 136 je Saugvorrichtung 134 vorhanden ist. Bei Vorliegen von mehreren Saugköpfen 136 können auch mehrere separate Trägerarme 138 zur Verbindung mit dem zweiten Segment 131, 133 vorliegen. In der dargestellten Ausführungsform ist der Trägerarm 138 rechenförmig ausgebildet und umfasst mehrere Finger 139, an deren Spitze jeweils ein Saugkopf 136 angeordnet ist. Der Trägerarm 138 ist vorzugsweise starr am zweiten Segment 131, 133 befestigt. In der dargestellten Ausführungsform ragen die Finger 139 des Trägerarms 138 von einer gemeinsamen Verbindungsstrebe 140 senkrecht ab. Die Verbindungsstrebe 140 ist wiederum mittels eines senkrecht zu ihr verlaufenden Verbindungsglieds 142 mit dem zweiten Segment 131, 133 verbunden. In der dargestellten Ausführungsform ist das Verbindungsglied 142 des Trägerarms 138 senkrecht mit dem zweiten Segment 131, 133 verbunden. Ebenso ist es denkbar, dass das Verbindungsglied 142 und somit der Trägerarm 138 schräg vom zweiten Segment 131, 133 abragt. In der jeweiligen Aufnahmestellung und Abgabestellung der Saugerarme 118, 119 ragt das Verbindungsglied 142 und somit der Trägerarm 138 jeweils schräg nach unten ab. Auf diese Weise könnte der Winkel, den der jeweilige Saugerarm 118, 119 um die erste Achse A1' zurücklegen muss, reduziert werden.

Wie aus Fig. 14 hervorgeht, ist das zweite Segment 131, 133 des ersten oder zweiten Saugerarms 118, 119 in der jeweiligen Aufnahmestellung bezüglich der Längsmittelebene L nach innen geschwenkt. Konkret ist der Abschnitt des zweiten Segments 131, 133 nach innen geschwenkt, an dem der Trägerarm 138 befestigt ist. Ebenso ist erkennbar, dass das zweite Segment 131, 133 des ersten oder zweiten Saugerarms 118, 119, konkret derjenige Abschnitt des zweiten Segments 131, 133, an dem der Trägerarm 38 befestigt ist, in der jeweiligen Abgabestellung bezüglich der Längsmittelebene L nach außen geschwenkt ist.

Details einer möglichen konkreten Struktur und eines Antriebs für die Saugerarme 118, 119 sind identisch wie zuvor für die Saugerarme 24, 25 beschrieben.

Bezugnehmend auf Fig. 11 bis 13 soll nun der Ablauf eines Übergabeprozesses mit der Übergabeeinheit 118 näher erläutert werden. Die Blisterpackungen 4, 6 werden an der Bereitstellposition 28 in der Stanzstation 110 nacheinander durch den ersten und zweiten Saugerarm 118, 119 der ersten Übergabeeinheit 108 aufgenommen, zur ersten bzw. zweiten Zwischenablageposition 122, 123 bewegt und dort abgelegt.

Die erste Blisterpackung 4 wird in der ersten Bereitstellposition 28 vorzugsweise von oben aufgenommen und ebenfalls von oben in der ersten Zwischenablageposition 122 abgelegt. Die erste Blisterpackung 4 ist dabei in der Bereitstellposition 28 im Bereich der Längsmittelebene L angeordnet und in der ersten Zwischenablageposition 122 bezüglich der Längsmittelebene L nach außen versetzt angeordnet. Die erste Blisterpackung 4 wird in der ersten Zwischenablageposition 122 im Vergleich zur Bereitstellposition 28 mit derselben Seite nach oben, aber um 180° um ihren Mittelpunkt gedreht abgelegt.

Für die Übergabe der zweiten Blisterpackung 6 aus der Bereitstellposition 28 hin zur zweiten Zwischenablageposition 123 mittels des zweiten Saugerarms 119 gelten exakt dieselben Aussagen wie für die Übergabe der ersten Blisterpackung 4 mittels des ersten Saugerarms 118. Lediglich die Zeitpunkte des Aufnehmens der Blisterpackung 6 und des Ablegens der Blisterpackung 6 sind im Wesentlichen gegenläufig zu den Zeitpunkten, an denen die erste Blisterpackung 4 aufgenommen und abgelegt wird. Die beiden Saugerarme 118, 119 vollziehen eine Schwenkbewegung um dieselbe erste Achse A1', während die Drehbewegungen ihrer zweiten Segmente 131, 133 um die jeweilige zweite Achse A2", A2'" zueinander entgegengesetzte Drehrichtungen zeigen. An einem Scheitelpunkt der Drehbewegung, wie sie im Querschnitt in Fig. 16 dargestellt ist, sind die Blisterpackungen 4, 6 vorzugsweise parallel zur Längsmittelebene L angeordnet.

Wenn die erste Übergabeeinheit 108 gemäß Fig. 11 zusammen mit der zweiten Übergabeeinrichtung 14 verwendet wird, ist bei der Ansteuerung der beiden Übergabeeinheiten 108, 14 darauf zu achten, dass sich im Bereich der Zwischenablagepositionen 122, 123 jeweils diejenigen Saugerarme 118, 119, 24, 25 befinden, die auf die jeweils andere Zwischenablageposition 122, 123 zugreifen (Fig. 12). Bevorzugt sind also in der Darstellung der Fig. 12 der erste Saugerarm 118 der ersten Übergabeeinheit 108 und der erste Saugerarm 24 der zweiten Übergabeeinheit 14 synchron zueinander bewegt, während der zweite Saugerarm 119 der ersten Übergabeeinheit 108 und der zweite Saugerarm 25 der zweiten Übergabeeinheit 14 ebenfalls synchron zueinander bewegt werden.

Bevorzugt erfolgt das Aufnehmen der Blisterpackungen 4, 6 in der Bereitstellposition 28 von oben. Gegebenenfalls ist es auch möglich, dass die Blisterpackungen 4, 6 nicht in einer horizontalen Ausrichtung an der Bereitstellposition 28 liegen, sondern beispielsweise in einer senkrechten Ausrichtung oder unter einem schrägen Winkel zur Vertikalen bereitgestellt werden. In diesem Fall vollziehen die Saugerarme 118, 119 eine Schwenkbewegung um die erste Achse A1' lediglich über einen Winkel, der kleiner als 180° ist, in der Regel zwischen 60° und 180°. Die Übersetzung zwischen den Kegelrädern 156, 160 ist dann entsprechend anzupassen, um sicherzustellen, dass das zweite Segment 131, 133 während dieser reduzierten Schwenkbewegung um die erste Achse A1' eine vollständige 180°-Drehung um die zweite Achse A2", A2'" vollzieht.

An den Bereitstellpositionen werden die Blisterpackungen 4, 6 allgemein jeweils bevorzugt mittels einer geeigneten Halterung festgehalten, bis sie von den Saugerarmen ergriffen wurden. Die Halterung muss die Blisterpackungen rechtzeitig vor der Transferbewegung freigeben.

An den Zwischenablagepositionen werden die Blisterpackungen 4, 6 allgemein jeweils bevorzugt mittels einer geeigneten Halterung festgehalten, bis sie von den Saugerarmen ergriffen wurden. Die Halterung muss die Blisterpackungen rechtzeitig vor der Transferbewegung freigeben.

Die Blisterpackungen 4, 6 enthalten in der Regel Tabletten, Kapseln oder Dragees. Die Blisterpackungen 4, 6 sind meist mit einer ebenen Deckfolie verschlossen, an der die Saugköpfe 36 angreifen können. Es ist aber auch denkbar, dass die Blisterpackungen 4, 6 nach oben offen bleiben. Dies ist besonders dann möglich, wenn nicht Tabletten, sondern andere medizinische Produkte wie Spritzen, Ampullen, Vials oder dergleichen verpackt wurden. Bei einer Blisterverpackung 4, 6 ohne Deckfolie ist es vorteilhaft, wenn die Saugköpfe 36 an die Form der Produkte angepasst werden und direkt an den in den Blisternäpfen fixierten Produkten angreifen. Die Blisterpackungen 4, 6 können auch nicht-medizinische Produkte enthalten.

## Patentansprüche

1. Vorrichtung (2) zum Transferieren von Blisterpackungen (4, 6) mit einer ersten Übergabeeinheit (8, 108) zur Übergabe der Blisterpackungen (4, 6) von einer Stanzstation (10, 110), einem Transportmittel oder einem Zwischenspeicher zu einer Zwischenablage (12, 112) und mit einer zweiten Übergabeeinheit (14) zur Übergabe der Blisterpackungen (4, 6) von der Zwischenablage (12, 112) an ein Fördermittel (16) oder einen Speicher,
wobei die zweite Übergabeeinheit (14) einen ersten Saugerarm (24) aufweist, der bewegbar ist zwischen einer ersten Aufnahmestellung zum Aufnehmen einer ersten Blisterpackung (4) von einer ersten Zwischenablageposition (22, 122) auf der Zwischenablage (12, 112) und einer ersten Abgabestellung zum Ablegen der ersten Blisterpackung (4) in einer Endablageposition (26) auf dem Fördermittel (16) oder in dem Speicher,
wobei die zweite Übergabeeinheit (14) einen zweiten Saugerarm (25) aufweist, der bewegbar ist zwischen einer zweiten Aufnahmestellung zum Aufnehmen einer zweiten Blisterpackung (6) von einer zweiten Zwischenablageposition (23, 123) auf der Zwischenablage (112) und einer zweiten Abgabestellung zum Ablegen der zweiten Blisterpackung (6) in derselben Endablageposition (26),
wobei der erste und der zweite Saugerarm (24, 25) zu beiden Seiten einer Längsmittelebene (L) der Vorrichtung (2) angeordnet sind,
wobei jeder Saugerarm (24, 25) ein erstes Segment (30, 32) und ein zweites Segment (31, 33) aufweist, wobei das erste Segment (30, 32) jedes Saugerarms (24, 25) um eine zugehörige erste Achse (A1), die senkrecht zur Längsmittelebene (L) verläuft, drehbar befestigt ist,
wobei das erste Segment (30, 32) jedes Saugerarms (24, 25) einen Abschnitt aufweist, an dem das zweite Segment (31, 33) drehbar um eine zur ersten Achse (A1) im Wesentlichen senkrecht verlaufende ortsveränderliche zweite Achse (A2, A2') befestigt ist, wobei an dem zweiten Segment (31, 33) eine Saugvorrichtung (34) zum Ansaugen und Halten einer Blisterpackung (4, 6) angeordnet ist,
wobei die Saugerarme (24, 25) derart ausgestaltet und angesteuert sind, dass die Bewegung der Saugerarme (24, 25) von der ersten oder zweiten Aufnahmestellung zur ersten oder zweiten Abgabestellung und zurück eine kombinierte Bewegung ist, die sich zumindest aus einer ersten Drehbewegung des ersten Segments (30, 32) und des zweiten Segments (31, 33) um die erste Achse (A1) und einer zweiten Drehbewegung des zweiten Segments (31, 33) um die zweite Achse (A2, A2') zusammensetzt,
wobei die Saugerarme (24, 25) derart ausgestaltet und angesteuert sind, dass die Blisterpackungen (4, 6) in der ersten und zweiten Zwischenablageposition (22, 23; 122, 123) von den Saugvorrichtungen (34) des ersten und zweiten Saugerarms (24, 25) von oben aufgenommen und ebenfalls von oben in die Endablageposition (26) abgelegt werden,
wobei die erste und zweite Zwischenablageposition (22, 23; 122, 123) bezüglich der Längsmittelebene (L) nach außen versetzt angeordnet sind und die Endablageposition (26) im Bereich der Längsmittelebene (L) angeordnet ist,
wobei die zweite Achse (A2) des ersten Saugerarms (24) derart angeordnet ist, dass sich die zweite Achse (A2) des ersten Saugerarms (24) während der ersten Drehbewegung des ersten Segments (30) des ersten Saugerarms (24) in einer ersten Ebene (E1) bewegt, die die erste Zwischenablageposition (22, 122) oder deren seitliche Projektion in einer ersten geraden Linie (L1) schneidet, die seitlich versetzt zur Mitte (M1) der ersten Zwischenablageposition (22, 122) ist, und
wobei die zweite Achse (A2') des zweiten Saugerarms (25) derart angeordnet ist, dass sich die zweite Achse (A2') des zweiten Saugerarms (25) während der ersten Drehbewegung des ersten Segments (32) des zweiten Saugerarms (25) in einer zweiten Ebene (E2) bewegt, die die zweite Zwischenablageposition (23, 123) oder deren seitliche Projektion in einer zweiten geraden Linie (L2) schneidet, die seitlich versetzt zur Mitte (M2) der zweiten Zwischenablageposition (23, 123) ist.

2. Vorrichtung (2) nach Anspruch 1, **dadurch gekennzeichnet, dass** das zweite Segment (31, 33) des ersten oder zweiten Saugerarms (24, 25) in der ersten oder zweiten Aufnahmestellung jeweils bezüglich der Längsmittelebene (L) nach außen geschwenkt ist, und dass das zweite Segment (31, 33) des ersten oder zweiten Saugerarms (24, 25) in der ersten oder zweiten Abgabestellung jeweils bezüglich der Längsmittelebene (L) nach innen geschwenkt ist.

3. Vorrichtung (2) nach Anspruch 1 oder 2, **dadurch gekennzeichnet, dass** der erste und zweite Saugerarm (24, 25) derart angesteuert sind, dass der erste und zweite Saugerarm (24, 25) gegenläufige hin- und hergehende Schwenkbewegungen ausführen.

4. Vorrichtung (2) nach einem der vorhergehenden Ansprüche, **dadurch gekennzeichnet, dass** die zweiten Segmente (31, 33) und somit die an den Saugvorrichtungen (34) des ersten und zweiten Saugerarms (24, 25) gehaltenen Blisterpackungen (4, 6) eine Drehbewegung um die zweite Achse (A2, A2') von im Wesentlichen 180° ausführen, wenn sich die Saugerarme (24, 25) von der ersten oder zweiten Aufnahmestellung zur ersten oder zweiten Abgabestellung oder umgekehrt bewegen.

5. Vorrichtung (2) nach einem der vorhergehenden Ansprüche, **dadurch gekennzeichnet, dass** die ersten Segmente (30, 32) eine Drehbewegung um die erste Achse (A1) von 120° bis 180° ausführen, wenn sich die Saugerarme (24, 25) von der ersten oder zweiten Aufnahmestellung zur ersten oder zweiten Abgabestellung oder umgekehrt bewegen.

6. Vorrichtung (2) nach einem der vorhergehenden Ansprüche, **dadurch gekennzeichnet, dass** die Saugerarme (24, 25) parallel zur ersten Achse (A1) verschiebbar gelagert sind.

7. Vorrichtung (2) nach einem der vorhergehenden Ansprüche, **dadurch gekennzeichnet, dass** die Saugvorrichtung (34) jedes Saugerarms (24, 25) mindestens einen Saugkopf (36) umfasst, der mittels mindestens eines Trägerarms (38) am zweiten Segment (31, 33) befestigt ist.

8. Vorrichtung (2) nach Anspruch 7, **dadurch gekennzeichnet, dass** der mindestens eine Trägerarm (38) starr am zweiten Segment (31, 33) befestigt ist.

9. Vorrichtung (2) nach Anspruch 7 oder 8, **dadurch gekennzeichnet, dass** der mindestens eine Trägerarm (38) in der ersten oder zweiten Aufnahmestellung und in der ersten oder zweiten Abgabestellung vom zweiten Segment (31, 33) schräg nach unten abragt.

10. Verfahren zum Transferieren von Blisterpackungen (4, 6) von einer Stanzstation (10, 110), einem Transportmittel oder einem Zwischenspeicher zu einer Zwischenablage (12, 112) und von der Zwischenablage (12, 112) an ein Fördermittel (16) oder einen Speicher mittels einer Vorrichtung (2), mit folgenden Schritten:
- Übergeben einer ersten und einer zweiten Blisterpackung (4, 6) von der Stanzstation (10, 110), dem Transportmittel oder dem Zwischenspeicher zu der Zwischenablage (12, 112), wobei die Blisterpackungen (4, 6) auf der Zwischenablage (12, 112) in einer Reihe nebeneinander in einer ersten und einer zweiten Zwischenablageposition (22, 23; 122, 123) zu beiden Seiten einer Längsmittelebene (L) der Vorrichtung (2) abgelegt werden;
- Aufnehmen einer ersten Blisterpackung (4) in der ersten Zwischenablageposition (22, 122) von der Zwischenablage (12, 112), Bewegen der ersten Blisterpackung (4) und Ablegen der ersten Blisterpackung (4) in einer Endablageposition (26) auf dem Fördermittel (16) oder in dem Speicher, wobei die erste Blisterpackung (4) in der ersten Zwischenablageposition (22, 122) von oben aufgenommen und ebenfalls von oben in der Endablageposition (26) auf dem Fördermittel (16) oder in dem Speicher abgelegt wird, wobei die erste Blisterpackung (4) in der ersten Zwischenablageposition (22, 122) bezüglich der Längsmittelebene (L) nach außen versetzt angeordnet ist und in der Endablageposition (26) im Bereich der Längsmittelebene (L) abgelegt wird, und wobei die erste Blisterpackung (4) in der Endablageposition (26) im Vergleich zur ersten Zwischenablageposition (22, 122) mit derselben Seite nach oben, aber um 180° um ihren Mittelpunkt gedreht abgelegt wird; und
- Aufnehmen einer zweiten Blisterpackung (6) in der zweiten Zwischenablageposition (23, 123) von der Zwischenablage (12, 112), Bewegen der zweiten Blisterpackung (6) und Ablegen der zweiten Blisterpackung (6) in der Endablageposition (26) auf dem Fördermittel (16) oder in dem Speicher, wobei die zweite Blisterpackung (6) in der zweiten Zwischenablageposition (23, 123) von oben aufgenommen und ebenfalls von oben in der Endablageposition (26) auf dem Fördermittel (16) oder in dem Speicher abgelegt wird, wobei die zweite Blisterpackung (6) in der zweiten Zwischenablageposition (23, 123) bezüglich der Längsmittelebene (L) nach außen versetzt angeordnet ist und in der Endablageposition (26) im Bereich der Längsmittelebene (L) abgelegt wird, und wobei die zweite Blisterpackung (6) in der Endablageposition (26) im Vergleich zur zweiten Zwischenablageposition (23, 123) mit derselben Seite nach oben, aber um 180° um ihren Mittelpunkt gedreht abgelegt wird.

11. Verfahren nach Anspruch 10, **dadurch gekennzeichnet, dass** das Aufnehmen, Bewegen und Ablegen der ersten und zweiten Blisterpackung (4, 6) von der Zwischenablage (12, 112) auf das Fördermittel (16) oder in den Speicher mittels Saugerarmen (24, 25) durchgeführt wird, die gegenläufige hin- und hergehende Schwenkbewegungen ausführen.

12. Verfahren nach Anspruch 10 oder 11, **dadurch gekennzeichnet, dass** das Übergeben der ersten und zweiten Blisterpackung (4, 6) von der Stanzstation (10, 110), dem Transportmittel oder dem Zwischenspeicher zu der Zwischenablage (12, 112) folgende Schritte umfasst:
- Aufnehmen der ersten Blisterpackung (4) in einer ersten Bereitstellposition (20) von der Stanzstation (10), dem Transportmittel oder dem Zwischenspeicher, Bewegen der ersten Blisterpackung (4) und Ablegen der ersten Blisterpackung (4) in der ersten Zwischenablageposition (22) auf der Zwischenablage (12), wobei die erste Blisterpackung (4) von oben in der ersten Zwischenablageposition (22) auf die Zwischenablage (12) abgelegt wird; und
- Aufnehmen der zweiten Blisterpackung (6) in einer zweiten Bereitstellposition (21) von der Stanzstation (10), dem Transportmittel oder dem Zwischenspeicher, Bewegen der zweiten Blisterpackung (6) und Ablegen der zweiten Blisterpackung (6) in der zweiten Zwischenablageposition (23) auf der Zwischenablage (12), wobei die zweite Blisterpackung (6) von oben in der zweiten Zwischenablageposition (23) auf die Zwischenablage (12) abgelegt wird.

13. Verfahren nach Anspruch 12, **dadurch gekennzeichnet, dass** die erste und zweite Blisterpackung (4, 6) in der ersten und zweiten Bereitstellposition (20, 21) in einer Reihe zu beiden Seiten der Längsmittelebene (L) angeordnet sind, und dass die erste und die zweite Blisterpackung (4, 6) in der ersten und zweiten Zwischenablageposition (22, 23) im Vergleich zur ersten und zweiten Bereitstellposition (20, 21) um 180° um ihre Mittelpunkte gedreht abgelegt werden.

14. Verfahren nach Anspruch 13, **dadurch gekennzeichnet, dass** das Übergeben der ersten und zweiten Blisterpackung (4, 6) von der Stanzstation (10), dem Transportmittel oder dem Zwischenspeicher zu der Zwischenablage (12) gleichzeitig erfolgt.

15. Verfahren nach Anspruch 10 oder 11, **dadurch gekennzeichnet, dass** das Übergeben der ersten und zweiten Blisterpackung (4, 6) von der Stanzstation (110), dem Transportmittel oder dem Zwischenspeicher zu der Zwischenablage (112) folgende Schritte umfasst:
- Aufnehmen der ersten Blisterpackung (4) in einer Bereitstellposition (28) von der Stanzstation (110), dem Transportmittel oder dem Zwischenspeicher, Bewegen der ersten Blisterpackung (4) und Ablegen der ersten Blisterpackung (4) in der ersten Zwischenablageposition (122) auf der Zwischenablage (112), wobei die erste Blisterpackung (4) von oben in der ersten Zwischenablageposition (122) auf der Zwischenablage (112) abgelegt wird, wobei die erste Blisterpackung (4) in der Bereitstellposition (28) im Bereich der Längsmittelebene (L) angeordnet ist und in der ersten Zwischenablageposition (122) nach außen versetzt zur Längsmittelebene (L) abgelegt wird, und wobei die erste Blisterpackung (4) in der ersten Zwischenablageposition (122) im Vergleich zur Bereitstellposition (28) um 180° um ihren Mittelpunkt gedreht abgelegt wird; und
- Aufnehmen einer zweiten Blisterpackung (6) in derselben Bereitstellposition (28) von der Stanzstation (110), dem Transportmittel oder dem Zwischenspeicher, Bewegen der zweiten Blisterpackung (6) und Ablegen der zweiten Blisterpackung (6) in der zweiten Zwischenablageposition (123) auf der Zwischenablage (112), wobei die zweite Blisterpackung (6) in der Bereitstellposition (28) von oben aufgenommen und ebenfalls von oben in der zweiten Zwischenablageposition (123) auf der Zwischenablage (112) abgelegt wird, wobei die zweite Blisterpackung (6) in der Bereitstellposition (28) im Bereich der Längsmittelebene (L) angeordnet ist und in der zweiten Zwischenablageposition (123) nach außen versetzt zur Längsmittelebene (L) abgelegt wird, und wobei die zweite Blisterpackung (6) in der zweiten Zwischenablageposition (123) im Vergleich zur Bereitstellposition (28) um 180° um ihren Mittelpunkt gedreht abgelegt wird.

## Claims

1. Device (2) for transferring blister packs (4, 6), having a first transfer unit (8, 108) for transferring the blister packs (4, 6) from a punching station (10, 110), a transport means or a temporary store to a temporary depository (12, 112), and having a second transfer unit (14) for transferring the blister packs (4, 6) from the temporary depository (12, 112) to a conveying means (16) or a store;
wherein the second transfer unit (14) has a first suction arm (24) which is movable between a first receiving position for receiving a first blister pack (4) from a first temporary depository position (22, 122) on the temporary depository (12, 112) and a first dispensing position for depositing the first blister pack (4) in a final depository position (26) on the conveying means (16) or in the store;
wherein the second transfer unit (14) has a second suction arm (25) which is movable between a second receiving position for receiving a second blister pack (6) from a second temporary depository position (23, 123) on the temporary depository (112) and a second dispensing position for depositing the second blister pack (6) in the same final depository position (26);
wherein the first suction arm (24) and the second suction arm (25) are disposed on both sides of a longitudinal central plane (L) of the device (2);
wherein each suction arm (24, 25) has a first segment (30, 32) and a second segment (31, 33), wherein the first segment (30, 32) of each suction arm (24, 25) is fastened so as to be rotatable about an associated first axis (A1) which runs so as to be perpendicular to the longitudinal central plane (L) ;
wherein the first segment (30, 32) of each suction arm (24, 25) has a first portion to which the second segment (31, 33) is fastened so as to be rotatable about a locationally variable second axis (A2, A2') which runs so as to be substantially perpendicular to the first axis (A1), wherein a suction device (34) for suctioning and holding a blister pack (4, 6) is disposed on the second segment (31, 33);
wherein the suction arms (24, 25) are designed and actuated in such a manner that the movement of the suction arms (24, 25) from the first or the second receiving position to the first or the second dispensing position and back is a combined movement which is composed of at least a first rotating movement of the first segment (30, 32) and of the second segment (31, 33) about the first axis (A1) and a second rotating movement of the second segment (31, 33) about the second axis (A2, A2');
wherein the suction arms (24, 25) are designed and actuated in such a manner that the blister packs (4, 6) in the first temporary depository position (22, 23) and the second temporary depository position (122, 123) by the suction devices (34) of the first suction arm (24) and the second suction arm (25) are received from above and are likewise deposited from above in the final depository position (26);
wherein the first temporary depository position (22, 23) and the second temporary depository position (122, 123) in terms of the longitudinal central plane (L) are disposed so as to be offset towards the outside, and the final depository position (26) is disposed in the region of the longitudinal central plane (L);
wherein the second axis (A2) of the first suction arm (24) is disposed in such a manner that the second axis (A2) of the first suction arm (24) during the first rotating movement of the first segment (30) of the first suction arm (24) moves in a first plane (E1) which intersects the first temporary depository position (22, 122) or the lateral projection of the latter in a first straight line (L1) which is laterally offset in relation to the centre (M1) of the first temporary depository position (22, 122); and
wherein the second axis (A2') of the second suction arm (25) is disposed in such a manner that the second axis (A2') of the second suction arm (25) during the first rotating movement of the first segment (32) of the second suction arm (25) moves in a second plane (E2) which intersects the second temporary depository position (23, 123) or the lateral projection of the latter in a second straight line (L2) which is laterally offset in relation to the centre (M2) of the second temporary depository position (23, 123).

2. Device (2) according to Claim 1, **characterized in that** the second segment (31, 33) of the first suction arm (24) or the second suction arm (25) in the first or the second receiving position in terms of the longitudinal central plane (L) is in each case pivoted outwards, and **in that** the second segment (31, 33) of the first suction arm (24) or the second suction arm (25) in the first or the second dispensing position in terms of the longitudinal central plane (L) is in each case pivoted inwards.

3. Device (2) according to Claim 1 or 2, **characterized in that** the first suction arm (24) and the second suction arm (25) are actuated in such a manner that the first suction arm (24) and the second suction arm (25) carry out reciprocating pivoting movements in opposite directions.

4. Device (2) according to one of the preceding claims, **characterized in that** the second segments (31, 33) and thus the blister packs (4, 6) that are held on the suction devices (34) of the first suction arm (24) and the second suction arm (25) carry out a rotating movement of substantially 180° about the second axis (A2, A2') when the suction arms (24, 25) move from the first or the second receiving position to the first or the second dispensing position, or vice versa.

5. Device (2) according to one of the preceding claims, **characterized in that** the first segments (30, 32) carry out a rotating movement of 120° to 180° about the first axis (A1) when the suction arms (24, 25) move from the first or the second receiving position to the first or the second dispensing position, or vice versa.

6. Device (2) according to one of the preceding claims, **characterized in that** the suction arms (24, 25) are mounted so as to be displaceable in a manner parallel to the first axis (A1).

7. Device (2) according to one of the preceding claims, **characterized in that** the suction device (34) of each suction arm (24, 25) comprises at least one suction head (36) which is fastened to the second segment (31, 33) by means of at least one support arm (38).

8. Device (2) according to Claim 7, **characterized in that** the at least one support arm (38) is rigidly fastened to the second segment (31, 33).

9. Device (2) according to Claim 7 or 8, **characterized in that** the at least one support arm (38) in the first or the second receiving position and in the first or the second dispensing position of the second segment (31, 33) protrudes in an obliquely downward manner.

10. Method for transferring blister packs (4, 6) from a punching station (10, 110), a transport means, or a temporary store to a temporary depository (12, 112), and from the temporary depository (12, 112) to a conveying means (16) or a store by means of a device (2), said method comprising the following steps:
- transferring a first blister pack (4) and a second blister pack (6) from the punching station (10, 110), the transport means, or the temporary store to the temporary depository (12, 112), wherein the blister packs (4, 6) on the temporary depository (12, 112) are deposited beside one another in one row in a first temporary depository position (22, 23) and a second temporary depository position (122, 123) on both sides of a longitudinal central plane (L) of the device (2) ;
- receiving a first blister pack (4) in the first temporary depository position (22, 122) from the temporary depository (12, 112), moving the first blister pack (4) and depositing the first blister pack (4) in a final depository position (26) on the conveying means (16) or in the store, wherein the first blister pack (4) in the first temporary depository position (22, 122) is received from above and is likewise deposited from above in the final depository position (26) on the conveying means (16) or in the store, wherein the first blister pack (4) in the first temporary depository position (22, 122) in terms of the longitudinal central plane (L) is disposed so as to be offset towards the outside and in the final depository position (26) is deposited in the region of the longitudinal central plane (L), and wherein the first blister pack (4) in the final depository position (26) in comparison to the first temporary depository position (22, 122) is deposited with the same side facing upwards but so as to be rotated by 180° about the centre of said first blister pack (4); and
- receiving a second blister pack (6) in the second temporary depository position (23, 123) from the temporary depository (12, 112), moving the second blister pack (6) and depositing the second blister pack (6) in the final depository position (26) on the conveying means (16) or in the store, wherein the second blister pack (6) in the second temporary depository position (23, 123) is received from above and is likewise deposited from above in the final depository position (26) on the conveying means (16) or in the store, wherein the second blister pack (6) in the second temporary depository position (23, 123) in terms of the longitudinal central plane (L) is disposed so as to be offset towards the outside, and in the final depository position (26) is deposited in the region of the longitudinal central plane (L), and wherein the second blister pack (6) in the final depository position (26) in comparison to the second temporary depository position (23, 123) is deposited with the same side facing upwards but so as to be rotated by 180° about the centre of said second blister pack (6).

11. Method according to Claim 10, **characterized in that** the receiving, the moving, and the depositing of the first blister pack (4) and the second blister pack (6) from the temporary depository (12, 112) onto the conveying means (16) or into the store is carried out by means of suction arms (24, 25) which carry out reciprocating pivoting movements in opposite directions.

12. Method according to Claim 10 or 11, **characterized in that** the transferring of the first blister pack (4) and the second blister pack (6) from the punching station (10, 110), the transport means, or the temporary store to the temporary depository (12, 112) comprises the following steps:
- receiving the first blister pack (4) in a first preparatory position (20) from the punching station (10), the transport means, or the temporary store, moving the first blister pack (4) and depositing the first blister pack (4) in the first temporary depository position (22) on the temporary depository (12), wherein the first blister pack (4) is deposited from above in the first temporary depository position (22) onto the temporary depository (12); and
- receiving the second blister pack (6) in a second preparatory position (21) from the punching station (10), the transport means, or the temporary depository, moving the second blister pack (6) and depositing the second blister pack (6) in the second temporary depository position (23) on the temporary depository (12), wherein the second blister pack (6) is deposited from above in the second temporary depository position (23) onto the temporary depository (12).

13. Method according to Claim 12, **characterized in that** the first blister pack (4) and the second blister pack (6) in the first preparatory position (20) and the second preparatory position (21) are disposed in one row on both sides of the longitudinal central plane (L), and **in that** the first blister pack (4) and the second blister pack (6) in the first temporary depository position (22) and the second temporary depository position (23) in comparison to the first preparatory position (20) and the second preparatory position (21) are deposited so as to be rotated by 180° about the centres of said blister packs (4, 6).

14. Method according to Claim 13, **characterized in that** the transferring of the first blister pack (4) and the second blister pack (6) from the punching station (10, the transport means, or the temporary store to the temporary depository (12) takes place simultaneously.

15. Method according to Claim 10 or 11, **characterized in that** the transferring of the first blister pack (4) and the second blister pack (6) from the punching station (110), the transport means, or the temporary store to the temporary depository (112) comprises the following steps:
- receiving the first blister pack (4) in a preparatory position (28) from the punching station (110), the transport means, or the temporary store, moving the first blister pack(4) and depositing the first blister pack (4) in the first temporary depository position (122) on the temporary depository (112), wherein the first blister pack (4) is deposited from above in the first temporary depository position (122) on the temporary depository (112), wherein the first blister pack (4) in the preparatory position (28) is disposed in the region of the longitudinal central plane (L), and in the first temporary depository position (122) is deposited so as to be offset towards the outside in relation to the longitudinal central plane (L), and wherein the first blister pack (4) in the first temporary depository position (122) in comparison to the preparatory position (28) is deposited so as to be rotated by 180° about the centre of said first blister pack (4); and
- receiving a second blister pack (6) in the same preparatory position (28) from the punching station (110), the transport means, or the temporary store, moving the second blister pack (6) and depositing the second blister pack (6) in the second temporary depository position (123) on the temporary depository (112), wherein the second blister pack (6) in the preparatory position (28) is received from above and is likewise deposited from above in the second temporary depository position (123) on the temporary depository (112), wherein the second blister pack (6) in the preparatory position (28) is disposed in the region of the longitudinal central plane (L), and in the second temporary depository position (123) is deposited so as to be offset towards the outside in relation to the longitudinal central plane (L), and wherein the second blister pack (6) in the second temporary depository position (123) in comparison to the preparatory position (28) is deposited so as to be rotated by 180° about the centre of said second blister pack (6).

## Revendications

1. Dispositif (2) pour transférer des emballages de type blister (4, 6) avec une première unité de transfert (8, 108) pour transférer les emballages de type blister (4, 6) d'une station de découpage (10, 110), d'un moyen de transport ou d'un système de stockage intermédiaire à un dépôt intermédiaire (12, 112) et avec une deuxième unité de transfert (14) pour transférer les emballages de type blister (4, 6) du dépôt intermédiaire (12, 112) à un moyen de convoyage (16) ou à un système de stockage,
dans lequel la deuxième unité de transfert (14) présente un premier bras à ventouse (24), qui peut être déplacé entre une première position de réception pour recevoir un premier emballage de type blister (4) provenant de la première position de dépôt intermédiaire (22, 122) sur le dépôt intermédiaire (12, 112) et une première position de dépôt pour déposer le premier emballage de type blister (4) dans une position de dépôt finale (26) sur le moyen de convoyage (16) ou dans le système de stockage,
dans lequel la deuxième unité de transfert (14) présente un deuxième bras à ventouse (25) qui peut être déplacé entre une deuxième position de réception pour recevoir un deuxième emballage de type blister (6) provenant d'une deuxième position de dépôt intermédiaire (23, 123) sur le dépôt intermédiaire (112) et une deuxième position de dépôt pour déposer le deuxième emballage de type blister (6) dans la même position de dépôt finale (26),
dans lequel le premier et le deuxième bras à ventouse (24, 25) sont disposés de part et d'autre d'un plan central longitudinal (L) du dispositif (2),
dans lequel chaque bras à ventouse (24, 25) présente un premier segment (30, 32) et un deuxième segment (31, 33), dans lequel le premier segment (30, 32) de chaque bras à ventouse (24, 25) est fixé de manière à pouvoir tourner autour d'un premier axe (A1) associé qui s'étend de manière perpendiculaire par rapport au plan central longitudinal (L),
dans lequel le premier segment (30, 32) de chaque bras à ventouse (24, 25) présente une section, au niveau de laquelle le deuxième segment (31, 33) est fixé de manière à pouvoir tourner autour d'un deuxième axe (A2, A2') à emplacement variable s'étendant sensiblement de manière perpendiculaire par rapport au premier axe (A1), dans lequel un dispositif d'aspiration (34) pour aspirer et maintenir un emballage de type blister (4, 6) est disposé au niveau du deuxième segment (31, 33),
dans lequel les bras à ventouse (24, 25) sont configurés et pilotés de telle manière que le déplacement des bras à ventouse (24, 25) de la première ou la deuxième position de réception à la première ou la deuxième position de dépôt, et inversement, est un déplacement combiné qui se compose au moins d'un premier déplacement par rotation du premier segment (30, 32) et du deuxième segment (31, 33) autour du premier axe (A1) et d'un deuxième déplacement par rotation du deuxième segment (31, 33) autour du deuxième axe (A2, A2'),
dans lequel les bras à ventouse (24, 25) sont configurés et pilotés de telle manière que les emballages de type blister (4, 6) sont reçus par le haut dans la première et la deuxième position de dépôt intermédiaire (22, 23 ; 122, 123) par les dispositifs d'aspiration (34) du premier et du deuxième bras à ventouse (24, 25) et sont déposés également par le haut dans la position de dépôt finale (26),
dans lequel la première et la deuxième position de dépôt intermédiaire (22, 23 ; 122, 123) sont disposées de manière décalée vers l'extérieur par rapport au plan central longitudinal (L) et la position de dépôt finale (26) est disposée dans la zone du plan central longitudinal (L), dans lequel le deuxième axe (A2) du premier bras à ventouse (24) est disposé de telle manière que le deuxième axe (A2) du premier bras à ventouse (24) se déplace au cours du premier déplacement par rotation du premier segment (30) du premier bras à ventouse (24) dans un premier plan (E1), qui coupe la première position de dépôt intermédiaire (22, 122) ou sa projection latérale en une première ligne droite (L1) qui est décalée latéralement par rapport au centre (M1) de la première position de dépôt intermédiaire (22, 122), et
dans lequel le deuxième axe (A2') du deuxième bras à ventouse (25) est disposé de telle manière que le deuxième axe (A2') du deuxième bras à ventouse (25) se déplace au cours du premier déplacement par rotation du premier segment (32) du deuxième bras à ventouse (25) dans un deuxième plan (E2) qui croise la deuxième position de dépôt intermédiaire (23, 123) ou sa projection latérale en une deuxième ligne rectiligne (L2) qui est décalée latéralement par rapport au centre (M2) de la deuxième position de dépôt intermédiaire (23, 123).

2. Dispositif (2) selon la revendication 1, **caractérisé en ce que** le deuxième segment (31, 33) du premier ou deuxième bras à ventouse (24, 25) est pivoté vers l'extérieur respectivement par rapport au plan central longitudinal (L) dans la première ou la deuxième position de réception, et que le deuxième segment (31, 33) du premier ou du deuxième bras à ventouse (24, 25) est pivoté vers l'intérieur respectivement par rapport au plan central longitudinal (L) dans la première ou la deuxième position de dépôt.

3. Dispositif (2) selon la revendication 1 ou 2, **caractérisé en ce que** le premier et le deuxième bras à ventouse (24, 25) sont pilotés de telle manière que le premier et le deuxième bras à ventouse (24, 25) exécutent des déplacements par pivotement en va-et-vient opposés.

4. Dispositif (2) selon l'une quelconque des revendications précédentes, **caractérisé en ce que** les deuxièmes segments (31, 33) et ainsi les emballages de type blister (4, 6) maintenus au niveau des dispositifs d'aspiration (34) du premier et du deuxième bras à ventouse (24, 25) exécutent un déplacement par rotation autour du deuxième axe (A2, A2') de sensiblement 180° quand les bras à ventouse (24, 25) se déplacent de la première ou la deuxième position de réception à la première ou la deuxième position de dépôt, ou inversement.

5. Dispositif (2) selon l'une quelconque des revendications précédentes, **caractérisé en ce que** les premiers segments (30, 32) exécutent un déplacement par rotation autour du premier axe (A1) de 120° à 180° quand les bras à ventouse (24, 25) se déplacent de la première ou la deuxième position de réception à la première ou la deuxième position de dépôt, ou inversement.

6. Dispositif (2) selon l'une quelconque des revendications précédentes, **caractérisé en ce que** les bras à ventouse (24, 25) sont montés de manière à pouvoir coulisser de manière parallèle par rapport au premier axe (A1) .

7. Dispositif (2) selon l'une quelconque des revendications précédentes, **caractérisé en ce que** le dispositif d'aspiration (34) de chaque bras à ventouse (24, 25) comprend au moins une tête d'aspiration (36) qui est fixée au niveau du deuxième segment (31, 33) au moyen d'au moins un bras de support (38).

8. Dispositif (2) selon la revendication 7, **caractérisé en ce que** l'au moins un bras de support (38) est fixé de manière rigide au niveau du deuxième segment (31, 33).

9. Dispositif (2) selon la revendication 7 ou 8, **caractérisé en ce que** l'au moins un bras de support (38) dépasse, dans la première ou la deuxième position de réception et dans la première ou la deuxième position de dépôt, du deuxième segment (31, 33) de manière oblique vers le bas.

10. Procédé pour transférer des emballages de type blister (4, 6) d'une station de découpage (10, 110), d'un moyen de transport ou d'un système de stockage intermédiaire à un dépôt intermédiaire (12, 112) et du dépôt intermédiaire (12, 112) à un moyen de convoyage (16) ou à un système de stockage au moyen d'un dispositif (2), avec des étapes suivantes :
- de transfert d'un premier et d'un deuxième emballage de type blister (4, 6) de la station de découpage (10, 110), du moyen de transport ou du système de stockage intermédiaire au dépôt intermédiaire (12, 112), dans lequel les emballages de type blister (4, 6) sont déposés sur le dépôt intermédiaire (12, 112) côte à côte en une rangée dans une première et une deuxième position de dépôt intermédiaire (22, 23 ; 122, 123) de part et d'autre d'un plan central longitudinal (L) du dispositif (2) ;
- de réception du premier emballage de type blister (4) dans la première position de dépôt intermédiaire (22, 122) par le dépôt intermédiaire (12, 112), de déplacement du premier emballage de type blister (4) et de dépôt du premier emballage de type blister (4) dans une position de dépôt finale (26) sur le moyen de convoyage (16) ou dans le système de stockage, dans lequel le premier emballage de type blister (4) est reçu dans la première position de dépôt intermédiaire (22, 122) par le haut et est déposé également par le haut dans la position de dépôt finale (26) sur le moyen de convoyage (16) ou dans le système de stockage, dans lequel le premier emballage de type blister (4) est disposé dans la première position de dépôt intermédiaire (22, 122) de manière décalée vers l'extérieur par rapport au plan central longitudinal (L) et est déposé dans la position de dépôt finale (26) dans la zone du plan central longitudinal (L), et dans lequel le premier emballage de type blister (4) est déposé dans la position de dépôt finale (26) par le même côté vers le haut en comparaison avec la première position de dépôt intermédiaire (22, 122), toutefois de manière tournée de 180° autour de son point central et
- de réception d'un deuxième emballage de type blister (6) dans la deuxième position de dépôt intermédiaire (23, 123) par le dépôt intermédiaire (12, 112), de déplacement du deuxième emballage de type blister (6) et de dépôt du deuxième emballage de type blister (6) dans la position de dépôt finale (26) sur le moyen de convoyage (16) ou dans le système de stockage, dans lequel le deuxième emballage de type blister (6) est reçu dans la deuxième position de dépôt intermédiaire (23, 123) par le haut et est déposé également par le haut dans la position de dépôt finale (26) sur le moyen de convoyage (16) ou dans le système de stockage, dans lequel le deuxième emballage de type blister (6) est disposé dans la deuxième position de dépôt intermédiaire (23, 123) de manière décalée vers l'extérieur par rapport au plan central longitudinal (L) et est déposé dans la position de dépôt finale (26) dans la zone du plan central longitudinal (L), et dans lequel le deuxième emballage de type blister (6) est déposé dans la position de dépôt finale (26) par le même côté vers le haut en comparaison avec la deuxième position de dépôt intermédiaire (23, 123), toutefois de manière tournée de 180° autour de son point central.

11. Procédé selon la revendication 10, **caractérisé en ce que** la réception, le déplacement et le dépôt du premier et du deuxième emballage de type blister (4, 6) par le dépôt intermédiaire (12, 112) sur le moyen de convoyage (16) ou dans le système de stockage sont mis en œuvre au moyen de bras à ventouse (24, 25) qui exécutent des déplacements par pivotement en va-et-vient opposés.

12. Procédé selon la revendication 10 ou 11, **caractérisé en ce que** le transfert du premier et du deuxième emballage de type blister (4, 6) de la station de découpage (10, 110), du moyen de transport ou du système de stockage intermédiaire au dépôt intermédiaire (12, 112) comprend des étapes suivantes :
- de réception du premier emballage de type blister (4) dans une première position de fourniture (20) par la station de découpage (10), le moyen de transport ou le système de stockage intermédiaire, de déplacement du premier emballage de type blister (4) et de dépôt du premier emballage de type blister (4) dans la première position de dépôt intermédiaire (22) sur le dépôt intermédiaire (12), dans lequel le premier emballage de type blister (4) est déposé par le haut dans la première position de dépôt intermédiaire (22) sur le dépôt intermédiaire (12) et
- de réception du deuxième emballage de type blister (6) dans une deuxième position de fourniture (21) par la station de découpage (10), le moyen de transport ou le système de stockage intermédiaire, de déplacement du deuxième emballage de type blister (6) et de dépôt du deuxième emballage de type blister (6) dans la deuxième position de dépôt intermédiaire (23) sur le dépôt intermédiaire (12), dans lequel le deuxième emballage de type blister (6) est déposé par le haut dans la deuxième position de dépôt intermédiaire (23) sur le dépôt intermédiaire (12).

13. Procédé selon la revendication 12, **caractérisé en ce que** le premier et le deuxième emballage de type blister (4, 6) sont disposés dans la première et la deuxième position de fourniture (20, 21) en une rangée de part et d'autre du plan central longitudinal (L), et **en ce que** le premier et le deuxième emballage de type blister (4, 6) sont déposés dans la première et la deuxième position de dépôt intermédiaire (22, 23) en comparaison avec la première et la deuxième position de fourniture (20, 21) de manière tournée de 180° autour de leurs points centraux.

14. Procédé selon la revendication 13, **caractérisé en ce que** le transfert du premier et du deuxième emballage de type blister (4, 6) de la station de découpage (10), du moyen de transport ou du système de stockage intermédiaire au dépôt intermédiaire (12) est effectué simultanément.

15. Procédé selon la revendication 10 ou 11, **caractérisé en ce que** le transfert du premier et du deuxième emballage de type blister (4, 6) de la station de découpage (110), du moyen de transport ou du système de stockage intermédiaire au dépôt intermédiaire (112) comprend des étapes suivantes :
- de réception du premier emballage de type blister (4) dans une position de fourniture (28) par la station de découpage (110), le moyen de transport ou le système de stockage intermédiaire, de déplacement du premier emballage de type blister (4) et de dépôt du premier emballage de type blister (4) dans la première position de dépôt intermédiaire (122) sur le dépôt intermédiaire (112), dans lequel le premier emballage de type blister (4) est déposé par le haut dans la première position de dépôt intermédiaire (122) sur le dépôt intermédiaire (112), dans lequel le premier emballage de type blister (4) est disposé dans la position de fourniture (28) dans la zone du plan central longitudinal (L) et est déposé dans la première position de dépôt intermédiaire (122) de manière décalée vers l'extérieur par rapport au plan central longitudinal (L) et dans lequel le premier emballage de type blister (4) est déposé dans la première position de dépôt intermédiaire (122) en comparaison avec la position de fourniture (28) de manière tournée de 180° autour de son point central et
- de réception d'un deuxième emballage de type blister (6) dans la même position de fourniture (28) par la station de découpage (110), le moyen de transport ou le système de stockage intermédiaire, de déplacement du deuxième emballage de type blister (6) et de dépôt du deuxième emballage de type blister (6) dans la deuxième position de dépôt intermédiaire (123) sur le dépôt intermédiaire (112), dans lequel le deuxième emballage de type blister (6) est reçu par le haut dans la position de fourniture (28) et est déposé également par le haut dans la deuxième position de dépôt intermédiaire (123) sur le dépôt intermédiaire (112), dans lequel le deuxième emballage de type blister (6) est disposé dans la position de fourniture (28) dans la zone du plan central longitudinal (L) et est déposé dans la deuxième position de dépôt intermédiaire (123) de manière décalée vers l'extérieur par rapport au plan central longitudinal (L) et dans lequel le deuxième emballage de type blister (6) est déposé dans la deuxième position de dépôt intermédiaire (123) en comparaison avec la position de fourniture (28) de manière tournée de 180° autour de son point central.
